# EUROPEAN PATENT APPLICATION

(11) **EP 1 501 253 A2**
(43) Date of publication of application: **26.01.2005**
(21) Application number: 04015612.7
(22) Date of filing: 02.07.2004
(51) Int. Cl.: H04L 29/06, G06F 9/46

(54) **Data transmitting and receiving system**

(30) Priority: 04.07.2003 JP 2003192208
(71) Applicant: MATSUSHITA ELECTRIC INDUSTRIAL CO., LTD., Kadoma-shi, Osaka 571-8501 (JP)
(72) Inventor: Narita, Hirokazu, Takarazuka-shi Hyogo 665-0013 (JP); Miyoshi, Riki, Hirakata-shi Osaka 573-0049 (JP); Omura, Akiko, Kadoma-shi Osaka 571-0074 (JP)
(74) Representative: Grünecker, Kinkeldey, Stockmair & Schwanhäusser Anwaltssozietät

(57) **Abstract**

A data transmitting and receiving system that can be easily built even in an environment where different models coexist, wherein the data transmitting module checks whether or not the OK file exists in the working area (S2), if the OK file exists (YES at S2), deletes the OK file (S4), and prevents data transmitting modules of other data transmitting apparatuses from accessing to the working area. The data transmitting module writes the FTP file in the working area (S6). After writing the FTP file, the data transmitting module creates an END file in the working area (S8) and declares that the data transmitting module completed writing the FTP file.

## Description

### BACKGROUND OF THE INVENTION

### (1) Field of the Invention

The present invention relates to a data transmitting and receiving system in particular to a data transmitting and receiving system that is capable of performing control on a transmission and reception of data by a simple high speed method.

### (2) Description of the Related Art

A conventional data transmitting and receiving system performs control on a t ransmission and reception o f data with reference to content of a file in which information relating to the transmission and reception of data is stored (refer to Japanese Laid-Open Patent Publication No.7-146851).

However, a reference method of a file differs depending on a file type, an OS (Operating System) type and the like. Therefore, by the method of performing control on the transmission and reception of data with reference to content of a file, a system needs to be built in association with a computer model. Accordingly, in an environment where different models coexist, it requires efforts to build the data transmitting and receiving system.

### SUMMARY OF THE INVENTION

Considering above mentioned problems, the present invention aims to provide a data transmitting and receiving system that can be easily built in an environment where different models coexist.

In addition, the present invention aims to provide a data transmitting and receiving system capable of performing a high speed data transmitting and receiving control.

The data transmitting and receiving system according to some aspects of the present invention, comprising: a data transmitting apparatus that transmits said data; and a data receiving apparatus that receives said data, wherein the data transmitting apparatus and the data receiving apparatus respectively perform control on transmission and reception of said data by presence or absence of a predetermined control specific file.

With this structure, a file system of OS can be used so that a data transmitting and receiving system can be built using a function installed in OS without using special computer language. For example, a function such as shell script of UNIX (trade mark) is used. Therefore, the data transmitting and receiving system is easily built even in an environment where different models coexit.

Furthermore, the data transmitting and receiving are controlled only by presence or absence of a control specific file. Consequently, a high-speed data transmitting and receiving control can be performed without opening the control specific file every time when the data is transmitted and received. Further, a state of operation in the transmission and reception of data can be grasped by presence or absence of the control specific file.

Preferably, the data transmitting apparatus transmits said data as a data file, and the data receiving apparatus changes a file name of said data file transmitted from the data transmitting apparatus.

According to the structure, the data file transmitted from the data transmitting apparatus is stored with a different name in the data receiving apparatus. Consequently, the process of transmitting data by the data transmitting apparatus does not interfere with the process of receiving data by the data receiving apparatus each other. Here, the structure is realized by the first embodiment.

Further, it is preferred that the data receiving apparatus includes: a storing unit operable to store said control specific file and said data file transmitted from the data transmitting apparatus; and a data receiving management unit operable to control reception of said data file by presence or absence of said control specific file, wherein the control specific file includes a transmission permission file that indicates, by presence or absence of said transmission permission file, whether or not the data transmitting apparatus can transmit said data file to the data receiving apparatus, the data transmitting apparatus transmits, in the case where said transmission permission file exists, said data file to the data receiving apparatus after deleting said transmission permission file, and the data receiving management unit creates said transmission permission file after changing the file name of said data file transmitted from the data transmitting apparatus.

According to the structure, only the data transmitting apparatus which deleted the transmission permission file can transmit the data file to the data receiving apparatus. Consequently, a plurality of data transmitting apparatuses does not transmit data files at once to the receiving apparatus. Here, in the first embodiment, the storing unit applies to the working area and the data receiving management unit applies to the management module.

In here, the data transmitting apparatus includes: a storing unit operable to store a data file in which said control specific file and said data are stored; and a data transmission management unit operable to control transmission of said data file by presence or absence of said control specific file, wherein said control specific file includes a receiving permission file that indicates, by presence or absence of said receiving permission file, whether or not the data receiving apparatus can receive said data file, the data transmission management unit creates said receiving permission file at a time when said data file to be transmitted is created, and the data receiving apparatus receives said data file from the data transmitting apparatus after deleting the receiving permission file in the case where the receiving permission file exists.

According to the structure, only the data receiving apparatus which deleted the receiving permission file can receive the data file from the data transmitting apparatus. Consequently, a plurality of data receiving apparatuses does not receive data files at once from the data transmitting apparatuses. Here, the structure is realized by the second embodiment, the storing unit applies to the working area and the data transmitting management unit applies to the management module.

As further information about technical background to this application, the disclosure of Japanese Patent Application No. 2003-192208 filed on July 4, 2003 including specification, drawings and claims are incorporated herein by references in their entirety.

### BRIEF DESCRIPTION OF THE DRAWINGS

These and other objects, advantages and features of the invention will become apparent from the following description thereof taken in conjunction with the accompanying drawings that illustrate a specific embodiment of the invention. In the Drawings:
FIG. 1 is a diagram showing a structure of a data transmitting and receiving system according to the first embodiment of the present invention.
FIG. 2 is an outside drawing of a data transmitting apparatus and a data receiving apparatus.
FIG. 3 is a block diagram showing a hardware structure of the data transmitting apparatus and the data receiving apparatus.
FIG. 4A is a functional block diagram showing a system configuration of a data transmitting and receiving system according to the first embodiment of the present invention.
FIG. 4B is a functional block diagram showing a detailed configuration of a data transmitting module.
FIG. 4C is a functional block diagram showing a detailed configuration of a management module.
FIG. 4D is a functional block diagram showing a detailed configuration of an application module as a paradigm.
FIG. 5 is a diagram listing, by extension, a meaning of each file stored in a working area.
FIG. 6 is a flowchart of a process executed by the data transmitting module.
FIG. 7 is a diagram showing an example of files stored in the working area when the data transmitting module executes the process.
FIG. 8 is a flowchart of a process executed by the management module.
FIG. 9 is a diagram showing an example of files stored in the working area when the management module executes the process.
FIG. 10 is a flowchart of a process executed by the application module.
FIG. 11 is a diagram showing an example of files stored in the working area when the application module executes the process.
FIG. 12 is a diagram showing operation subjects, state of operation, and presence or absence of each file in a file transmitting and receiving process.
FIGS. 13A to 13F are diagrams showing an example of a list of files stored in the working area.
FIG. 14 is a diagram showing a transition from a creation to a deletion of an OK file.
FIG. 15 is a diagram showing a transition from a creation to a deletion of a wlock file.
FIG. 16 is a diagram showing a transition from a creation to a deletion of a rlock file.
FIG. 17 is a diagram showing a structure of a data transmitting and receiving system according to the second embodiment of the present invention.
FIG. 18A is a functional block diagram showing a configuration of the data transmitting and receiving system according to the second embodiment of the present invention.
FIG. 18B is a functional block diagram showing a detailed configuration of a data receiving module.
FIG. 18C is a functional block diagram showing a detailed configuration of a management module.
FIG. 18D is a functional block diagram showing a detailed configuration of an application module as a paradigm.
FIG. 19 is a diagram listing, by extension, a meaning of each file stored in the working area.
FIG. 20 is a flowchart of a process executed by a data receiving module.
FIG. 21 is a diagram showing an example of files stored in the working area when the data receiving module executes the process.
FIG. 22 is a flowchart of a process executed by the management module.
FIG. 23 is a diagram showing an example of files stored in the working area when the management module executes the process.
FIG. 24 is a flowchart of a process executed by the application module.
FIG. 25 is a diagram showing an example of files stored in the working area when the application module executes the process.
FIG. 26 is a diagram showing operation subjects, state of operation, and presence or absence of each file in the file transmitting and receiving apparatus.
FIGS. 27A to 27E are diagrams showing an example of a list of files stored in the working area.
FIG. 28 is a diagram showing a transition from a creation to a deletion of the OK file.
FIG. 29 is a diagram showing a transition from a creation to a deletion of the wlock file.
FIG. 30 is a transition from a creation to a deletion of the START file.
FIG. 31 is a diagram showing the other structure of the data transmitting and receiving system.

### DESCRIPTION OF THE PREFERRED EMBODIMENT(S)

The following explains about a data transmitting and receiving system according to embodiments of the present invention with reference to figures.

### (First Embodiment)

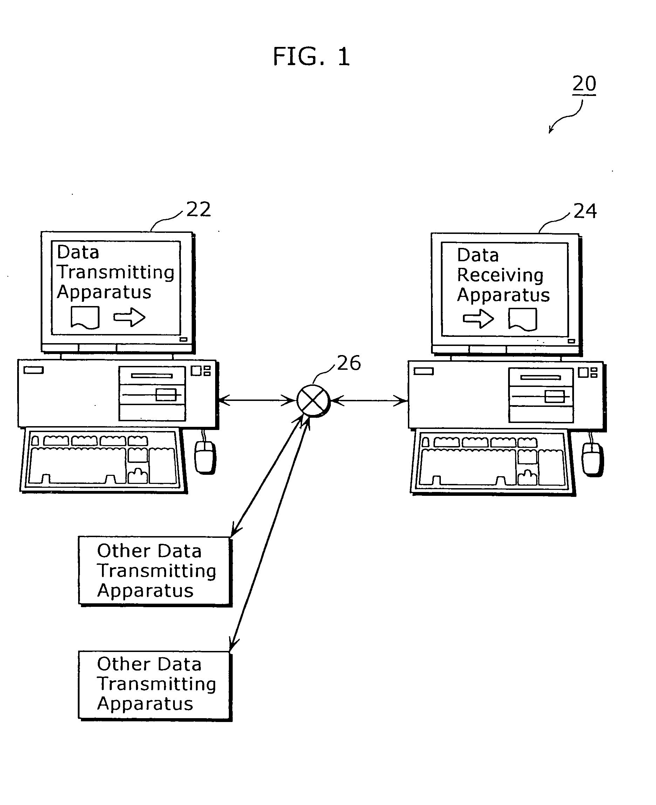

FIG. 1 is a diagram showing a structure of a data transmitting and receiving system according to the first embodiment of the present invention. A data transmitting and receiving system 20 is a system for sending data from one apparatus to the other, including a data transmitting apparatus 22 and a data receiving apparatus 24 connected mutually to the data transmitting apparatus 22 via a computer network 26. Here, in the computer network 26, many other data transmitting apparatuses which transmit data to the data receiving apparatus 24 are connected.

In the present embodiment, a method that the data transmitting apparatus 22 transmits, in sequence, data to the data receiving apparatus 24, the data being used at the data receiving apparatus 24

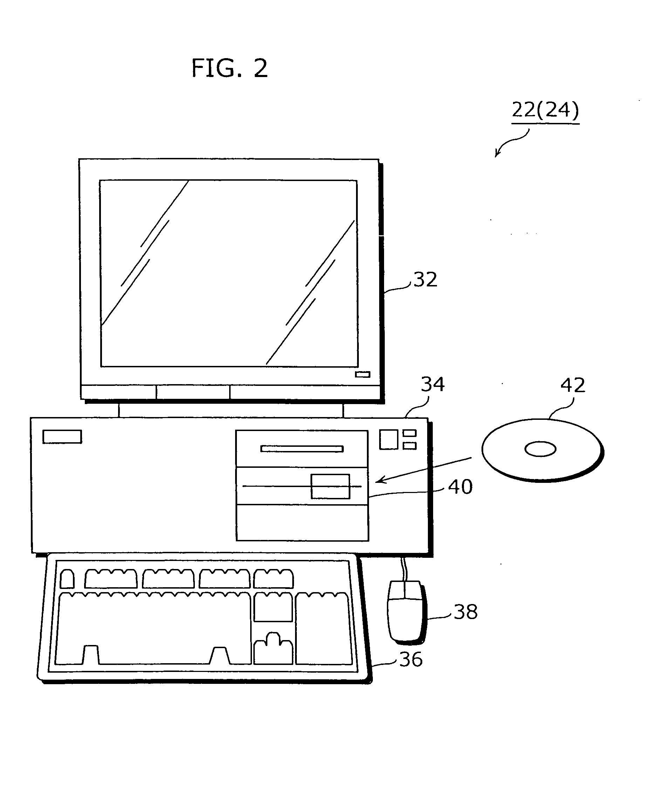

FIG. 2 is an outside drawing of the data transmitting apparatus 22. The data transmitting apparatus 22 is an apparatus that transmits data to the data receiving apparatus 24, including a computer 34, a keyboard 36, a mouse 38, a display 32, a CD-ROM (Compact Disc-Read Only Memory) apparatus 40 and a communication modem (not shown in FIG. 2), the keyboard 36 and the mouse 38 being by which an instruction is given to the computer 34, the display 32 being on which information such as a computing result is presented, and the CD-ROM apparatus 40 and the communication modem being by which a program to be executed by the computer 34 is read.

The program for transmitting data is stored in a CD-ROM 42 and read by the CD-ROM apparatus 40, the CD-ROM 42 being a medium that is readable in a computer. Or, it is read by the communication modem through the computer network 26.

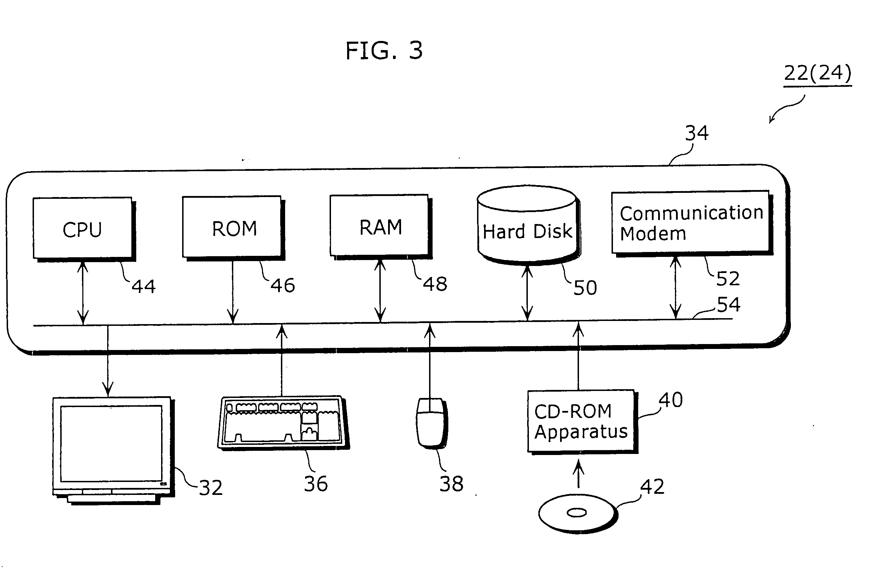

FIG. 3 is a block diagram showing a hardware structure of the data transmitting apparatus 22. The computer 34 includes a CPU (Central Processing Unit) 44, a ROM (Read Only Memory) 46, a RAM (Random Access Memory) 48, a hard disk 50, a communication modem 52 and a bus 54.

The CPU 44 executes a program read by the CD-ROM apparatus 40 or the communication modem 52. The ROM 46 stores programs and data necessary for an operation of the computer 34. The RAM 48 stores data such as parameter at the time when the program is executed. The hard disk 50 stores programs and data. The communication modem 52 communicates with other computers via the computer network 26. The bus 54 connects mutually, the CPU 44, the ROM 46, the RAM 48, the hard disk 50, the communication modem 52, the display 32, the keyboard 36, the mouse 38, and the CD-ROM apparatus 40.

The data receiving apparatus 24 shown in FIG. 1 is an apparatus for receiving data transmitted from the data transmitting apparatus 22, having a hardware structure as shown in FIGS. 2 and 3 as similar to the data transmitting apparatus 22. Therefore, the detailed explanation is not repeated in here.

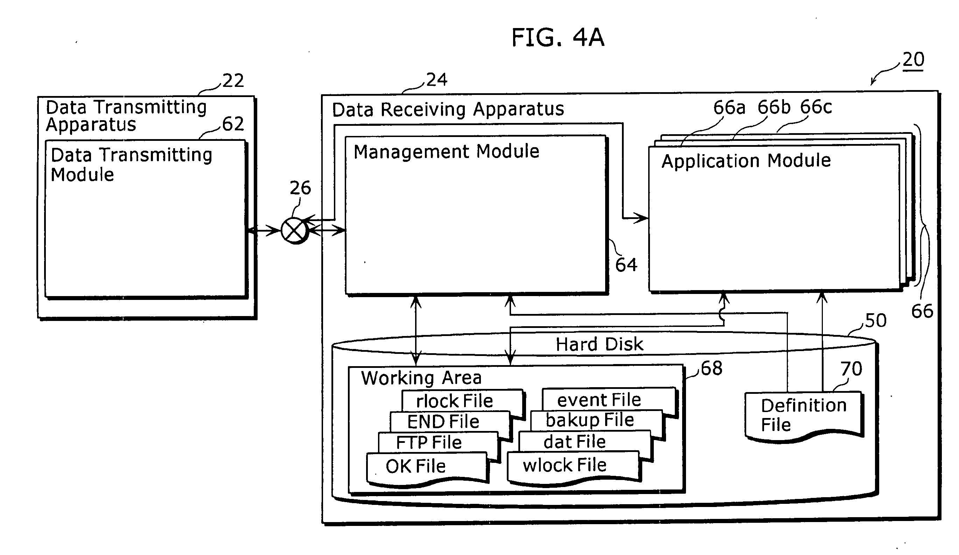

FIG. 4A is a functional block diagram showing a structure of the data transmitting and receiving system 20.

The CPU 44 of the data transmitting apparatus 22 executes a data transmitting module 62 that is a program for performing control relating to a data transmission. The CPU 44 of the data receiving apparatus 24 executes a management module 64 and an application module group 66. The management module 64 is a program for performing control relating to a reception of data, and the application module group 66 is made up of a plurality of application modules 66a, 66b and 66c that are programs for executing each predetermined process using the data. The following explains about the application module 66 in the application module group 66 as an example. The other application modules perform the same operation.

In the hard disk 50 of the data receiving apparatus 24, a working area 68 is provided for storing files including data transmitted and received between the data transmitting apparatus 22 and the data receiving apparatus 24 and the files indicating states of the data transmission and reception. Also, in the hard disk 50, a definition file 70 is held, the definition file 70 being in which a name unit of file names of the file to be transmitted and received between the data transmitting apparatus 22 and the data receiving apparatus 24. In here, in the case where a file name is "xxx. yyy", the first half before the period "xxx" is called as a "name unit", ant the latter half "yyy" is called as an "extension".

The management module 64 and the application module 66a can know a name unit of each file stored in the working area 68 with reference to the definition file 70 stored in the hard disk 50.

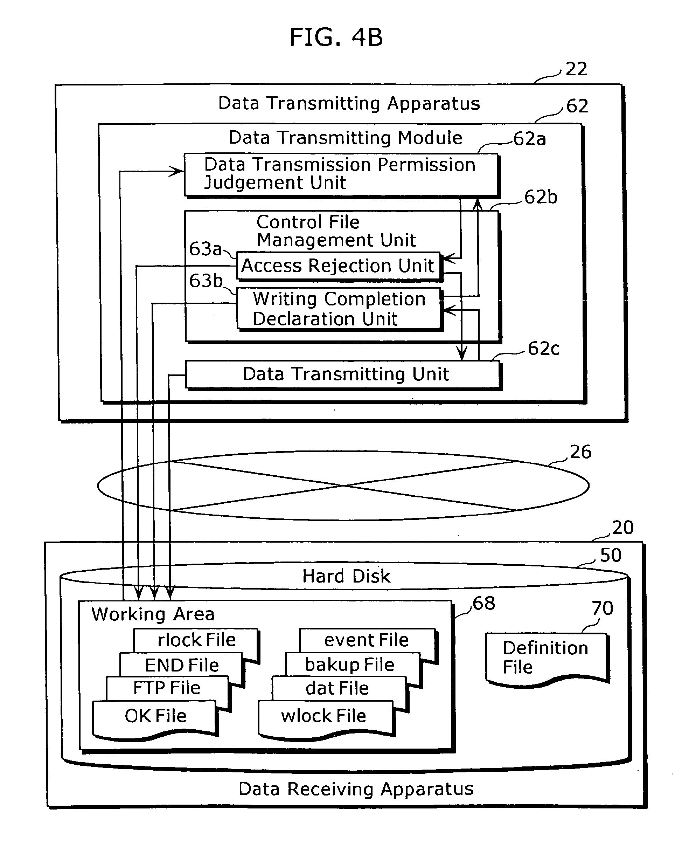

FIG. 4B is a functional block diagram showing a detailed configuration of a data transmitting module 62.

As explaining further in detail, the data transmitting module 62 includes a data transmitting permission judgement unit 62a, a control file management unit 62b and a data transmitting unit 62c. The data transmitting permission judgement unit 62a is a processing unit for judging, by a presence or absence of each file stored in the working area 68, whether or not a distribution of data is permitted.

The control file management unit 62b is a processing unit for performing, based on a state of data transmission, a creation and a deletion of each file in the working area 68, having an access rejection unit 63a and a writing completion declaration unit 63b. The access rejection unit 63a rejects data transmitting modules of other data transmitting apparatuses to access to the working area 68 by deleting the OK file to be described later. The writing completion declaration unit 63b declares that the data transmitting module 62 finished writing data (FTP file to be described later) by creating an END file to be described later in the working area 68.

The data transmitting unit 62c is a processing unit for transmitting data according to the judgement result by the data transmitting permission judgement unit 62a.

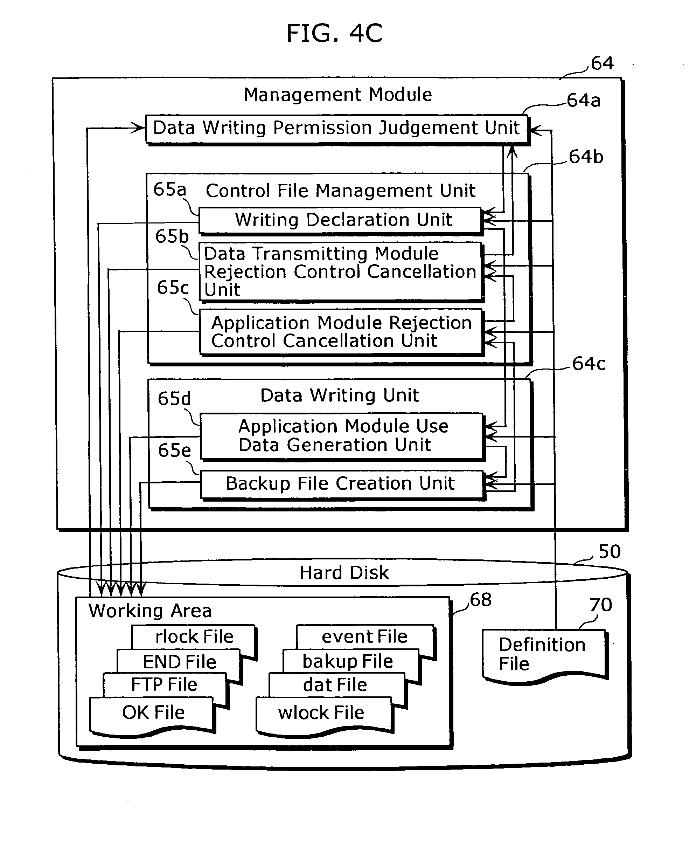

FIG. 4C is a functional block diagram showing a detailed configuration of a management module 64.

The management module 64 includes a data writing permission judgement unit 64a, a control file management unit 64b and a data writing unit 64c. The data writing permission judgment unit 64a is a processing unit for judging, by presence or absence of each file stored in the working area 68, whether or not a writing of data is permitted among files stored in the working area 68.

The control file management unit 64b is a processing unit for performing, based on a state of writing data, a creation and a deletion of each file in the working area 68, having a writing declaration unit 65a, a data transmitting module rejection control cancellation unit 65b and an application module rejection control cancellation unit 65c. The writing declaration unit 65a declares, by creating a wlock file to be described later, that the data writing unit 64c writes data into the working area 68, and rejects the application module 66a to read data from the working area 68. The data transmitting module rejection control cancellation unit 65b is a processing unit for canceling the rejection control on the data transmitting module 62 by creating an OK file to be described later. In addition, the data transmitting module rejection control cancellation unit 65b notifies, to the application module 66a, that there is an available data file (a dat file to be described later) by creating an event file to be described later. The application module rejection control cancellation unit 65c cancels the rejection control on the application module 66a by deleting the wlock file to be described later.

The data writing unit 64c is a processing unit for writing data among files stored in the working area 68 according to a judgement result by the data writing permission judgement unit 64a, having an application module use data generation unit 65d and a backup file creation unit 65e. The application module use data generation unit 65d appends the entity of a FTP file to be described later to the end of a dat file to be described later and generates data to be used by the application module. The backup file creation unit 65e creates a backup file (a bakup file to be described later) of the FTP file.

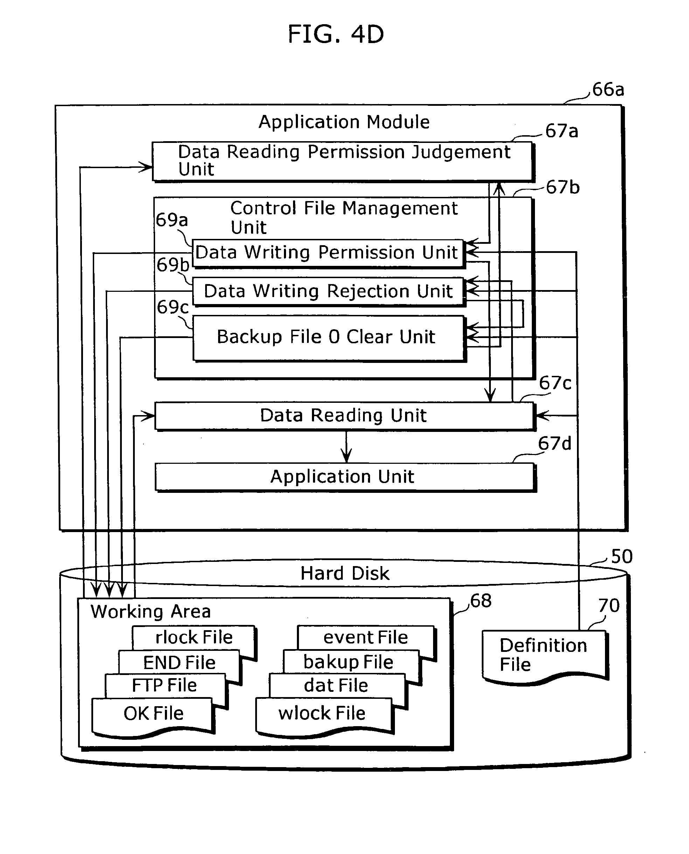

FIG. 4D is a functional block diagram showing a detailed configuration of an application module 66a as a paradigm.

The application module 66a includes a data reading permission judgement unit 67a, a control file management unit 67b, a data reading unit 67c, and an application unit 67d. The data reading permission judgement unit 67a is a processing unit for judging, by a presence or absence of each file stored in the working area 68, whether or not reading data stored in the working area 68 is permitted.

The control file management unit 67b is a processing unit for performing, based on a state of data reading, a creation and a deletion of each file in the working area 68, having a data writing rejection unit 69a, a data writing permission unit 69b, a backup file 0 clear unit 69c. The data writing rejection unit 69a rejects the management module 64 to write data into the working area 68 by creating a rlock file to be described later in the working area 68. The data writing permission unit 69b permits the management module 64 to write data by deleting the rolock file. The backup file 0 clear unit 69c sets a file size of a backup file (a bakup file) of the FTP file as 0 byte.

The data reading unit 67c is a processing unit for reading the data stored in the working area 68 according to a judgement result by the data reading permission judgement unit 67a. The application unit 67d is a processing unit for executing a predetermined processing using the data read by the data reading unit 67c.

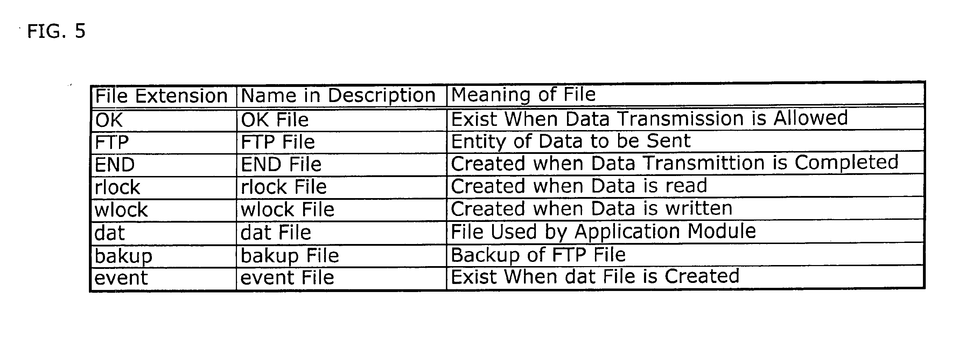

FIG. 5 is a diagram listing, by an extension, the meaning of each file stored in the working area 68.

A file whose extension is "OK" (hereafter referred to as "OK file") is a file existing in the case where data is transmittable from the data transmitting apparatus 22 to the data receiving apparatus 24. The file size of the OK file is 0 byte.

A file whose extension is "FTP" (hereafter referred to as "FTP file") is a file including content of data to be transmitted from the data transmitting apparatus 22 to the data receiving apparatus 24.

A file whose extension is "END" (hereafter referred to as "END file) is a file to be created when the FTP file transmission from the data transmitting apparatus 22 to the data receiving apparatus 24 is completed. The file size of the END file is 0 byte.

A file whose extension is "rlock" (hereafter referred to as "rlock file") is a file to be created when the application module 66a reads data from the working area 68. While the rlock file exists, the management module 64 cannot write data in the working area 68. The file size of the rlock file is 0 byte.

A file whose extension is "wlock" (hereafter referred to as "wlock file") is a file to be created when the management module 64 writes data in the working area 68. While the wlock file exists, the application module 66a cannot read data from the working area 68.

A file whose extension is "dat" (hereafter referred to as "dat file") is a file to be created by which the management module 64 stores, in sequence, the FTP files received from the data transmitting apparatus 22, the file being used by the application module 66a.

A file whose extension is "bakup" (hereafter referred to as "bakup file") is a back up file of the FTP file created by the management module 64.

A file whose extension is "event" (hereafter referred to as "event file") is a file for informing, from the management module 64 to the application module 66a, that the dat file is newly created. The file size of the event file is 0 byte.

Next, operations executed by the data transmitting module 62, the management module 64 and the application module 66a are explained with reference to flowcharts. In here, it is assumed that name units of file names of files to be created and deleted by three modules are the same.

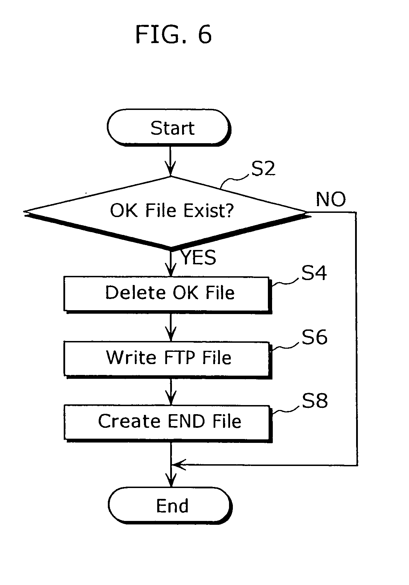

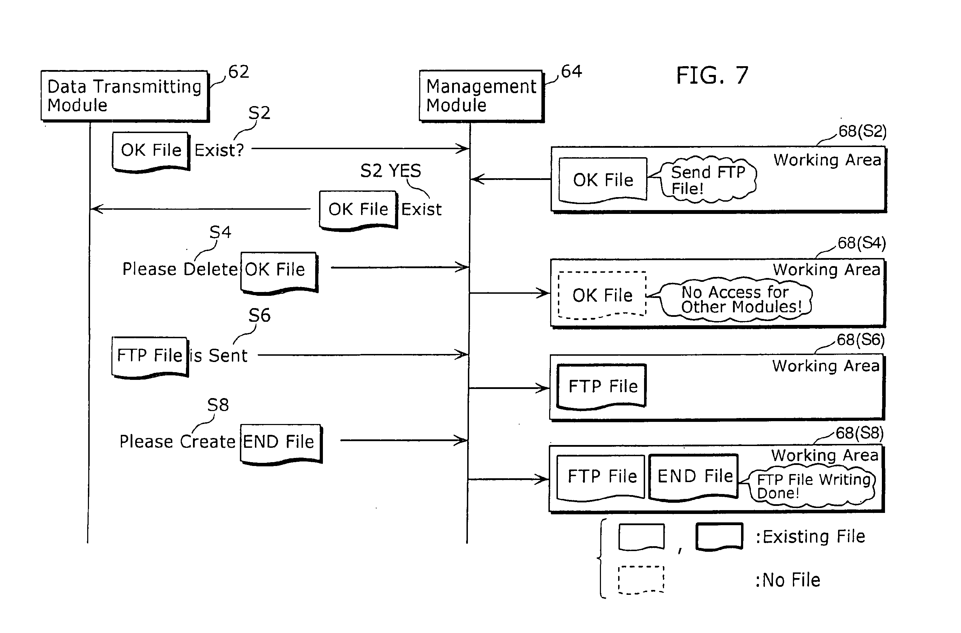

FIG. 6 is a flowchart showing a process executed by the data transmitting module 62. FIG. 7 is a diagram showing an example of a file stored in the working area 68 when the data transmitting module 62 executes the process. The following explains about the process executed by the data transmitting module 62 with reference to FIGS. 6 and 7.

The data transmitting module 62 checks whether or not the OK file exists in the working area 68 (S2). If the OK file does not exit (NO at S2), the transmitting module 62 terminates the process. If the OK file exists (YES at S2), the data transmitting module 62 deletes the OK file (S4). The presence of the OK file indicates that the data transmitting module can send the FTP file. Also, deleting the OK file prevents the data transmitting modules of other data transmitting apparatuses from accessing to the working area 68. In addition, it prevents the application module 66a from accessing to the working area 68.

Next, the data transmitting module 62 writes the FTP file in the working area 68 (S6). After writing the FTP file, the data transmitting module 62 creates an END file in the working area 68 (S8), and declares that the data transmitting module 62 finished writing the FTP file.

Here, the data transmitting module 62 cannot directly make reference to the working area 68. Therefore, the above mentioned process is performed via the management module 64 of the data receiving apparatus 24.

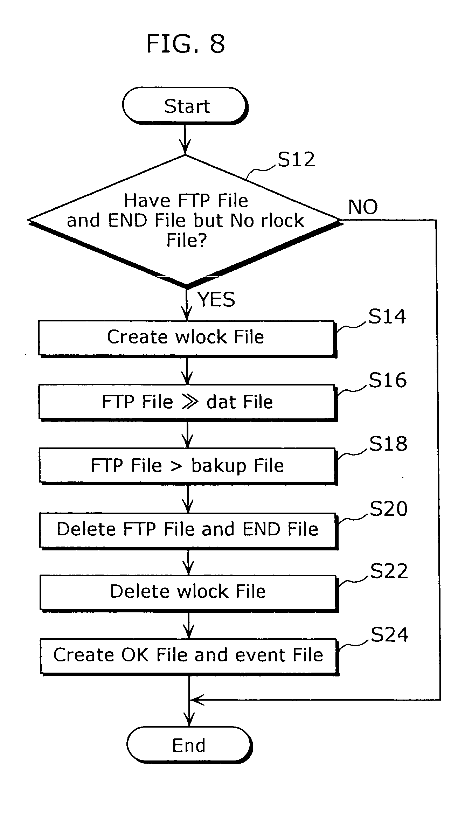

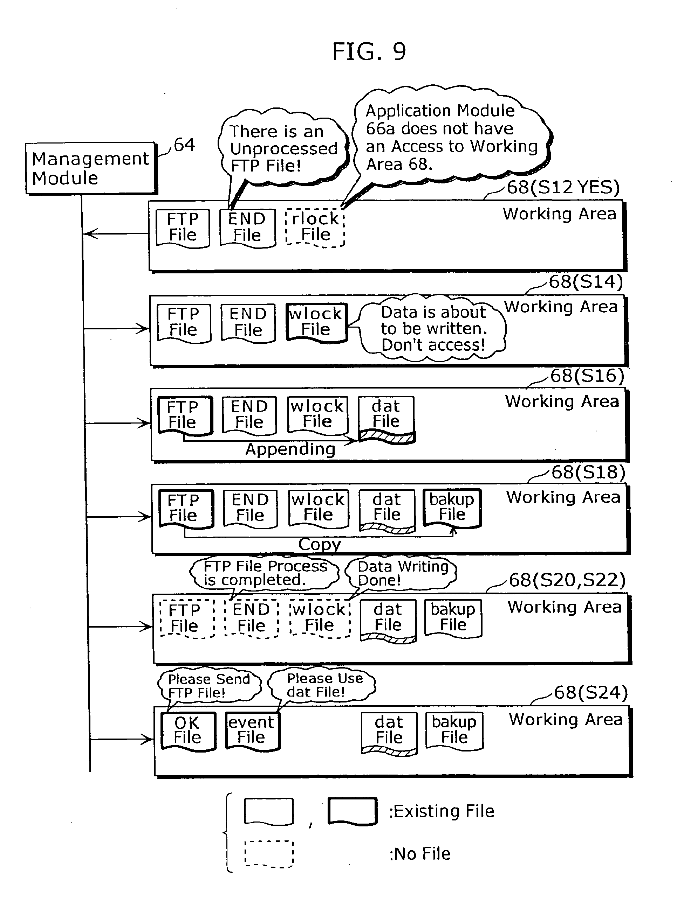

FIG. 8 is a flowchart showing a process executed by the management module 64. FIG. 9 is a diagram showing an example of a file stored in the working area 68 when the management module 64 executes the process. The following explains about the process executed by the management module 64 with reference to FIGS. 8 and 9.

The management module 64 checks whether or not the FTP file and the END file exist and the rlock file does not exist in the working area 68 (S12). The presences of the FTP file and the END file indicate that the data transmitting module 62 has written the FTP file in the working area 68. The absence of the rlock file indicates that the application module 66a has not accessed to the working area 68.

In the case where the mentioned condition is not satisfied (NO at S12), the process is terminated. In the case where the mentioned condition is satisfied (YES at S12), the management module 64 creates a wlock file (S14). The creation of the wlock file declares to write data in the working area 68 and rejects the application module 66a to read data from the working area 68.

After creating the wlock file, the management module 64 appends the content of the FTP file to the end of the dat file (S16). In the case where the dat file has been used already by the application module 66a, the dat file is deleted. Therefore, in this case, the FTP file is copied to the dat file. However, in the case where the dat file has not been used by the application module 66a, the file size of the dat file increases as much as the file size of the FTP file.

The management module 64 copies the FTP file to the bakup file, and creates a backup (S18).

After the copying process of the FTP file (S16 and S18), the management module 64 deletes the FTP file and the END file (S20). Also, the wlock file is deleted (S22). Accordingly, the exclusion control over the application module 66a is canceled.

Lastly, the management module 64 creates the OK file and the event file (S24). The creation of the OK file cancels the exclusion control over the data transmitting module 62. Also, the creation of the event file informs the application module 66a that there is an available dat file.

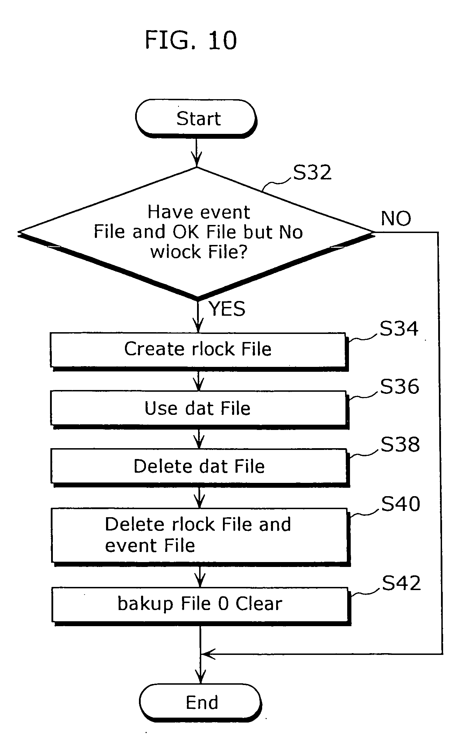

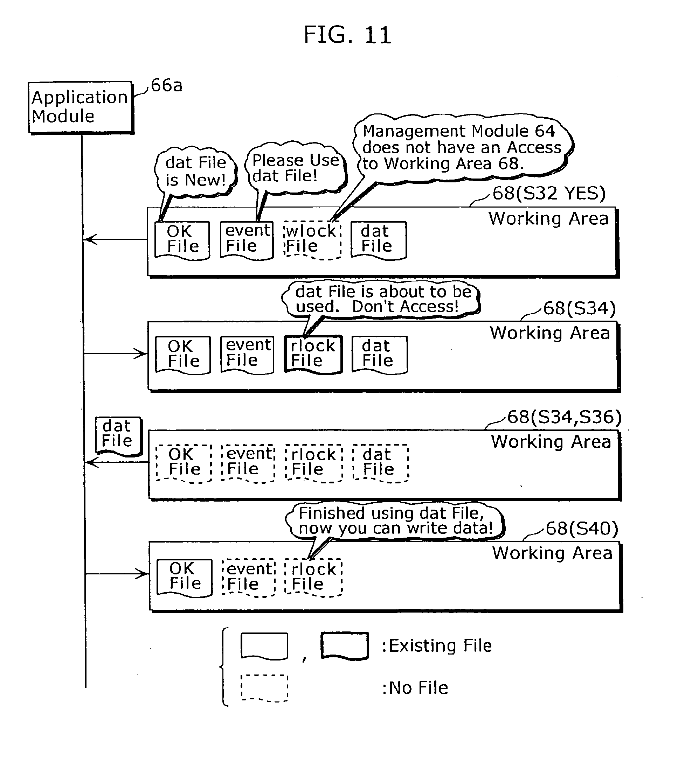

FIG. 10 is a flowchart showing a process executed by the application module 66a. FIG. 11 is a diagram showing an example of a file stored in the working area 68 when the application module 66a executes the process. The following explains about the process executed by the application module 66a with reference to FIGS. 10 and 11 as needed.

The application module 66a checks whether or not the event file and the OK file exist and the wlock file does not exist (S32). The presence of the event file indicates that the dat file available for the application module 66a has already been created. The absence of the wlock file indicates that the management module 64 has not written data in the working area 68. The presence of the OK file indicates that the process of appending the FTP file to the dat file by the management module 64 has been terminated.

In the case where the mentioned condition is not satisfied (NO at S32), the process is terminated. In the case where the mentioned condition is satisfied (YES at S32), the application module 66a creates the rlock file in the working area 68 (S34). The creation of the rlock file prevents the management module 64 from writing data in the working area 68 and declares to use the dat file.

The application module 66a reads the dat file when executing the process and uses the dat file (S36). After using the dat file, the application module 66a deletes the dat file (S38). Also, it deletes the rlock file and the event file (S40). The deletion of the rlock file makes it possible for the management module 64 to write data.

Lastly, the application module 66a deletes the content of the bakup file and sets the file size of the bakup file as 0 byte (S42).

Here, the management module 64 outputs a log file (not shown in Figures), as needed, that shows a state of an operation when there is a change of files stored in the working area 68.

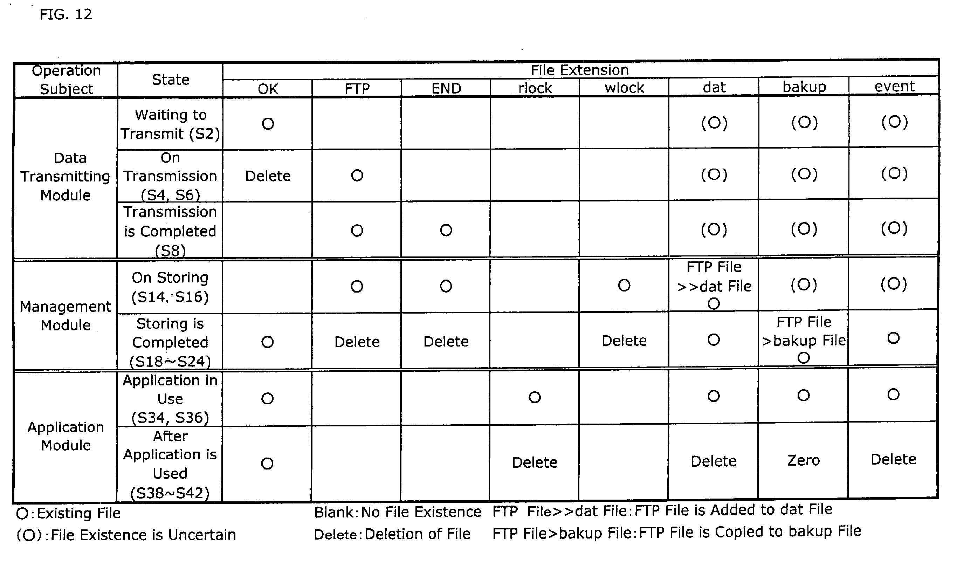

FIG. 12 is a diagram showing an operation subject, a state of operation, and presence or absence of each file in the file transmitting and receiving process.

As shown in FIG. 12, in the typical file transmitting and receiving process, i ) the data transmitting module 62 transmits the FTP file, ii ) the management module stores the transmitted FTP file to the dat file, and iii ) lastly the application module 66a uses the dat file. However, the data transmitting module 62, the management module 64 and the application module 66a operates as an independent process. Therefore, the process is not necessarily performed in said order.

For example, as shown in FIG. 12, in a state where the file transmitting process by the data transmitting module 62 is completed (S8), the FTP file and the END file exist and the OK file, the rlock file and the wlock file does not exist.

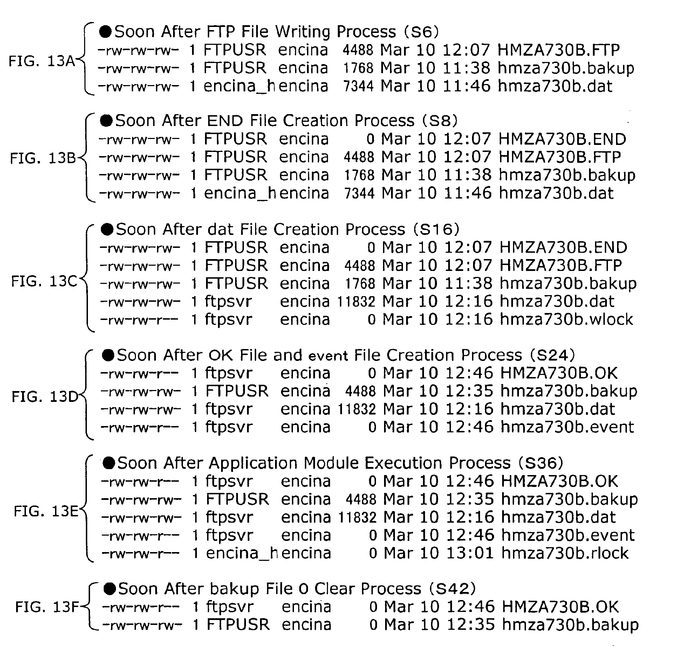

FIG. 13 is a diagram showing an example of a list of files stored in the working area 68 in each state of operation. The list shown in FIG. 13 is created by executing "Is command" in UNIX (registered trade mark). FIGS. 13A to 13F show transitions of files, in order, created according to the typical file transmitting and receiving process and stored in the working area 68.

As shown in FIG. 13A, soon after the FTP file writing process (S6) by the data transmitting module 62 shown in FIG. 6, the OK file has been deleted and the FTP file has been created.

As shown in FIG. 13B, soon after the END file creation process (S8), the END file has been newly created.

As shown in FIG. 13C, soon after the dat file creation process (S16) by the management module 64 shown in FIG. 8, the wlock file has been created and the FTP file has been appended to the dat file. Here, the name unit of the file name of the dat file is changed the name unit of the file name of the FTP file written in capital letters to small letters.

As shown in FIG. 13D, soon after the creation process of the OK file and the event file (S24), the FTP file, the END file and the wlock file have been deleted, and the OK file and the event file have been created.

As shown in FIG. 13E, soon after the use process of the dat file by the application module 66a (S36) shown in FIG. 10, the rlock file has been created.

As shown in FIG. 13F, soon after the 0 clear process of the bakup file (S42), the dat file, the rlock file and the event file have been deleted, and the file size of the bakup file has been 0 byte.

Next, focusing on each OK file, wlock file and rlock file among files used for an exclusion control of each module, the transition from the creation to the deletion of the files is explained.

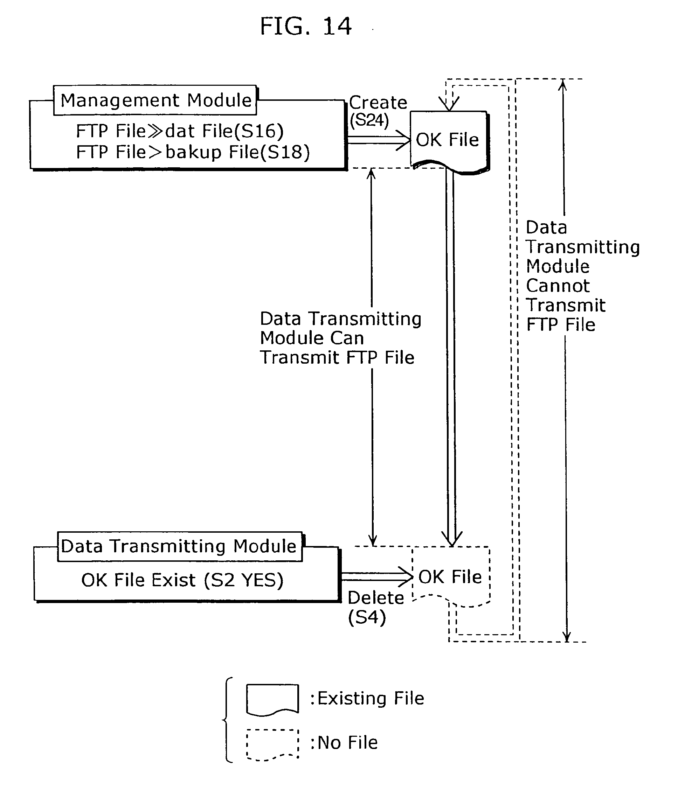

FIG. 14 is a diagram showing a transition from a creation to a deletion of the OK file. The OK file is created (S24), as shown in FIGS. 8 and 9, after the management module 64 updates the dat file (S16) and creates the bakup file (S18). The OK file is deleted (S4), as shown in FIGS. 6 and 7, in the case where the OK file exists in the working area 68 (YES at S2). While the OK file exists, the data transmitting module 62 can transmit the FTP file. On the other hand, while the OK file does not exist, the data transmitting module 62 cannot transmit the FTP file. Thus, the data transmitting module 62 performs an exclusion control on an access to the working area 68 by presence or absence of the OK file.

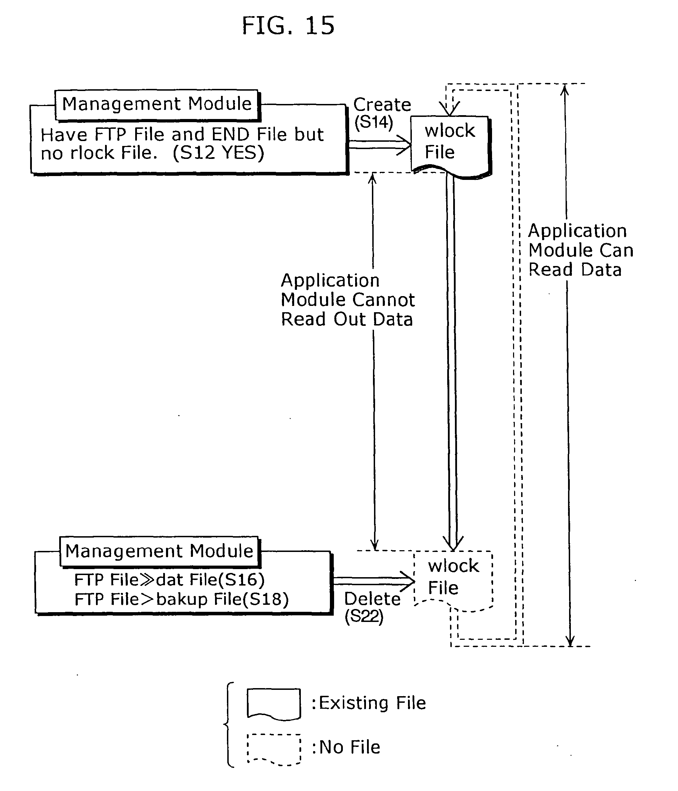

FIG. 15 is a diagram showing a transition from a creation to a deletion of the wlock file. As shown in FIGS. 8 and 9, the wlock file is created by the management module 64 (S14) in the case where the FTP file and the END file exist and the rlock file does not exist in the working area 68 (YES at S12). Also as shown in FIGS. 8 and 9, the wlock file is deleted by the management module 64 (S22) after the dat file is updated (S16) and the bakup file is created (S18). While the wlock file exists, the application module 66a cannot read data. On the other hand, while the wlock file does not exist, the application module 66a can read the data. Thus, the application module 66a performs an exclusion control on an access to the working area 68 by presence or absence of the wlock file.

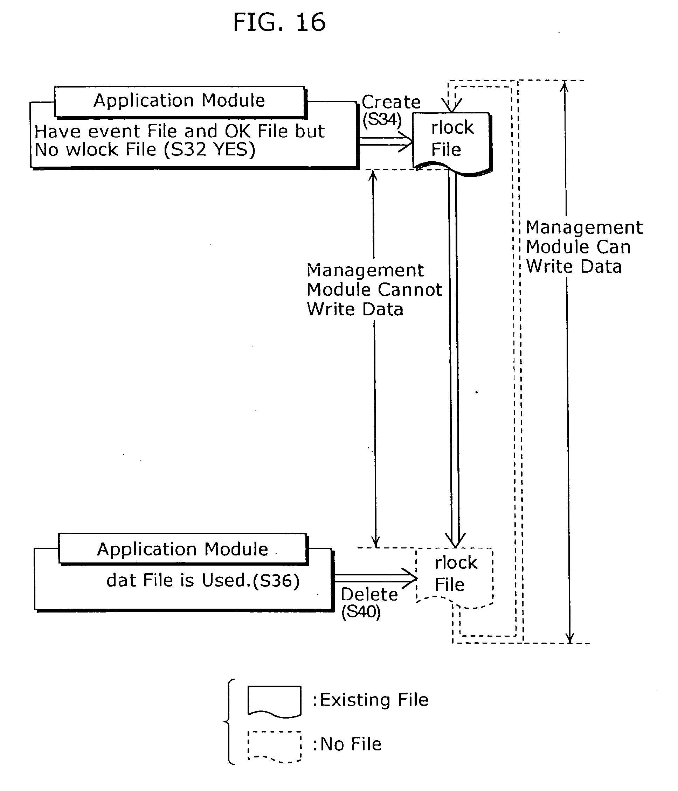

FIG. 16 is a diagram showing a transition from a creation to a deletion of the rlock file. As shown in FIGS. 10 and 11, the rlock file is created by the application module 66a (S34) in the case where the event file and the OK file exist and the rlock file does not exist in the working area 68 (YES at S32). The rlock file is deleted by the application module 66a (S40) after the dat file is used by the application module 66a (S36). While the rlock file exists, the management module 64 cannot write data. On the other hand, while the rlock file does not exist, the management module 64 can write data. Thus, the management module 64 performs an exclusion control on an access to the working area 68 by presence or absence of the rlock file.

As above explained, according to the present embodiment, each state is indicated by presence or absence of the OK file, the END file, the rlock file, the wlock file and the event file. The operations of the data transmitting module 62, the management module 64 and the application module 66a are controlled thereby.

Thus, each module is controlled only by presence or absence of files. Therefore, a file does not need to be opened at every time when data is transmitted and received so that the data transmitting and receiving control is performed in high speed.

In addition, the FTP file written in the working area 68 by the data transmitting module 62 is appended to the dat file by the management module 64 and deleted after it was appended. Therefore, the data transmitting module 62 can write the FTP file, in sequence, in the working area 68 if the working area 68 is in a writable state. Also, an extension of the file into which the data transmitting module 62 writes data differs from an extension of the file into which the management module 64 writes data. Consequently, the data writing process by the data transmitting module 62 and the data writing process by the management module 64 do not interfere with each other.

Further, the management module 64 outputs a log file as needed. Accordingly, a manager of the system is able to manage whether or not the transmitting and receiving process of data is correctly performed.

Furthermore, the management module 64 creates a bakup file which is a copy of the FTP file. Therefore, significant data will not be lost even if the system does not operate correctly during its operation.

### (Second Embodiment)

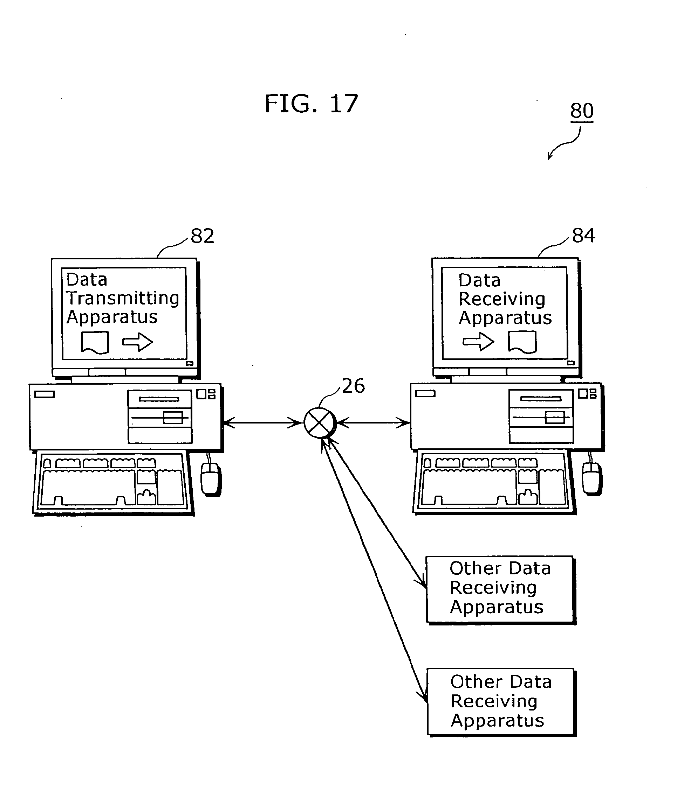

FIG. 17 is a diagram showing a structure of a data transmitting and receiving system according to the second embodiment of the present invention. A data transmitting and receiving system 80 is a system for transmitting data from one apparatus to other apparatuses, including a data transmitting apparatus 82 and a data receiving apparatus 84 mutually connected to the data transmitting apparatus 82 via the computer network 26. In here, many other data receiving apparatuses that receive the data transmitted from the data transmitting apparatus 82 are connected in the computer network 26.

In the present embodiment, differing from the first embodiment, a method that the data receiving apparatus 84 receives, in consequence, the data generated in the data transmitting apparatus 82 is explained.

Each hardware structure of the data transmitting apparatus 82 and the data receiving apparatus 84 are same as the hard ware structure of the data transmitting apparatus 22 (the data receiving apparatus 24) shown in FIGS. 2 and 3. Therefore, the detailed explanations are not repeated in here.

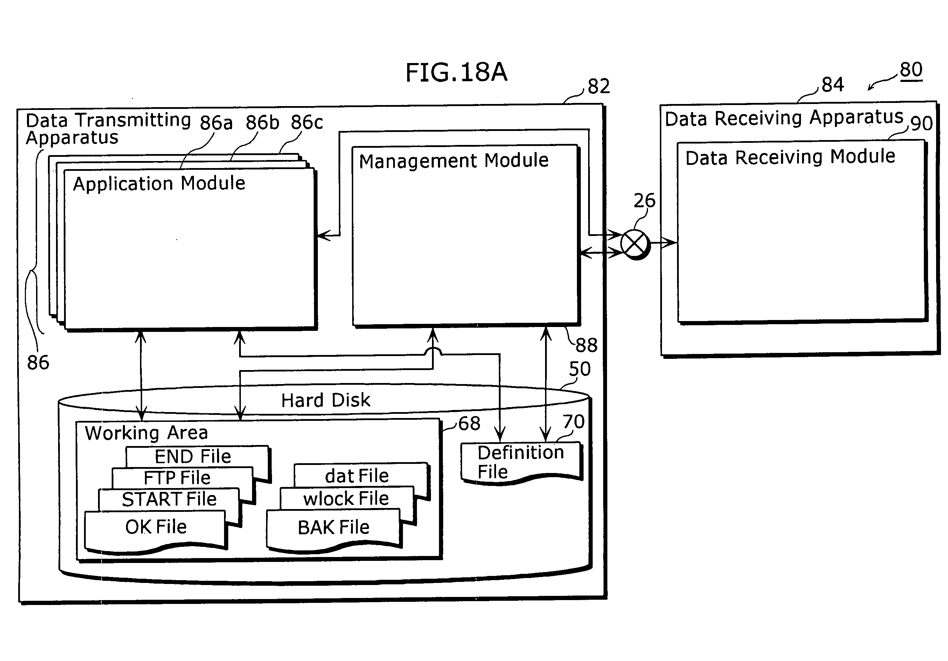

FIG. 18A is a functional block diagram showing a structure of the data transmitting and receiving system 80.

A CPU 44 of the data transmitting apparatus 82 executes an application module group 86 including a management module 88 and a plurality of application modules 86a, 86b and 86c. The management module 88 is a program for performing control relating to a transmission of data and the plurality of the application modules 86a, 86b and 86c respectively are programs for generating transmission data. The following explains about the application module 86a among the application module group 86 as an example. Other application modules perform same operations. A CPU 44 of the data receiving apparatus 84 executes a data receiving module 90 that is a program for performing control relating to the reception of data.

In the hard disk 50 of the data transmitting apparatus 82, the working area 68 is set for storing a file including data to be transmitted and received between the data transmitting apparatus 82 and the data receiving apparatus 84 and a file indicating a state of data transmission and reception. Additionally, a definition file 70 is stored in the hard disk 50, the file being in which a name unit of a file name of a file is defined, and being transmitted and received between the data transmitting apparatus 82 and the data receiving apparatus 84.

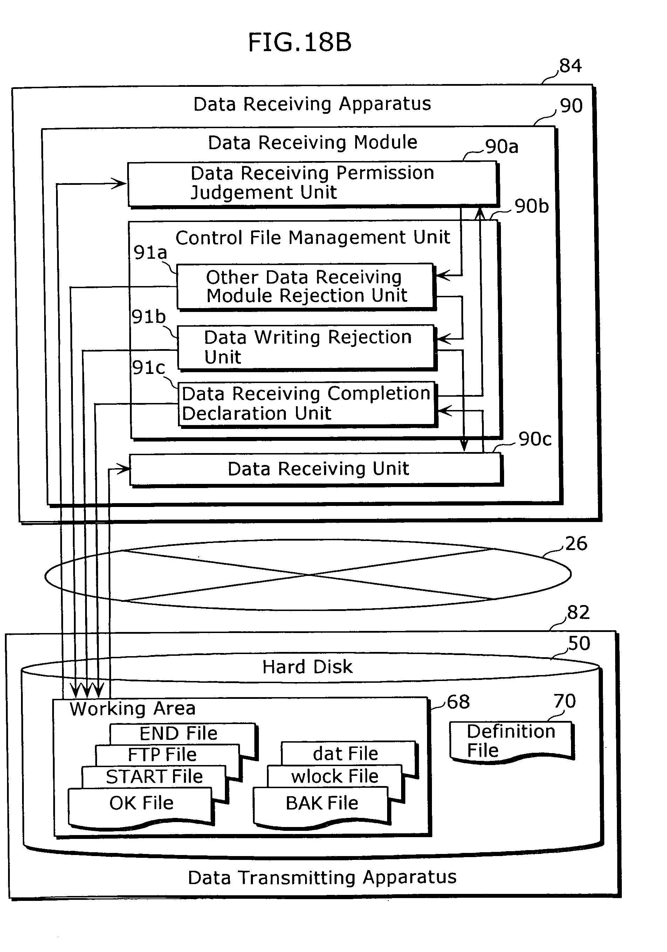

FIG. 18B is a functional block diagram showing a detailed structure of a data transmitting module 90.

As explaining further in detail, the data receiving module 90 includes a data receiving permission judgement unit 90a, a control file management unit 90b and a data receiving unit 90c. The data receiving permission judgement unit 90a is a processing unit for judging, by presence or absence of each file stored in the working area 68, whether or not the data receiving is permitted.

The control file management unit 90b is a processing unit for performing, based on a state of data reception, a creation and a deletion of each file in the working area 68, having an other data receiving module rejection unit 91a, a data writing rejection unit 91b and a data receiving completion declaration unit 91c. The other data receiving module rejection unit 91a rejects data receiving modules of other data receiving apparatuses to access to the working area 68 by deleting an OK file to be described later. The data writing rejection unit 91b rejects the management module 88 to write data into the working area 68 by creating a START file to be described later. The data receiving completion declaration unit 91c creates an END file to be described later and declares that the data receiving unit 90c finished receiving data (a FTP file to be described later).

The data receiving unit 90c is a processing unit for receiving data according to a judgement result by the data receiving permission judgement unit 90a.

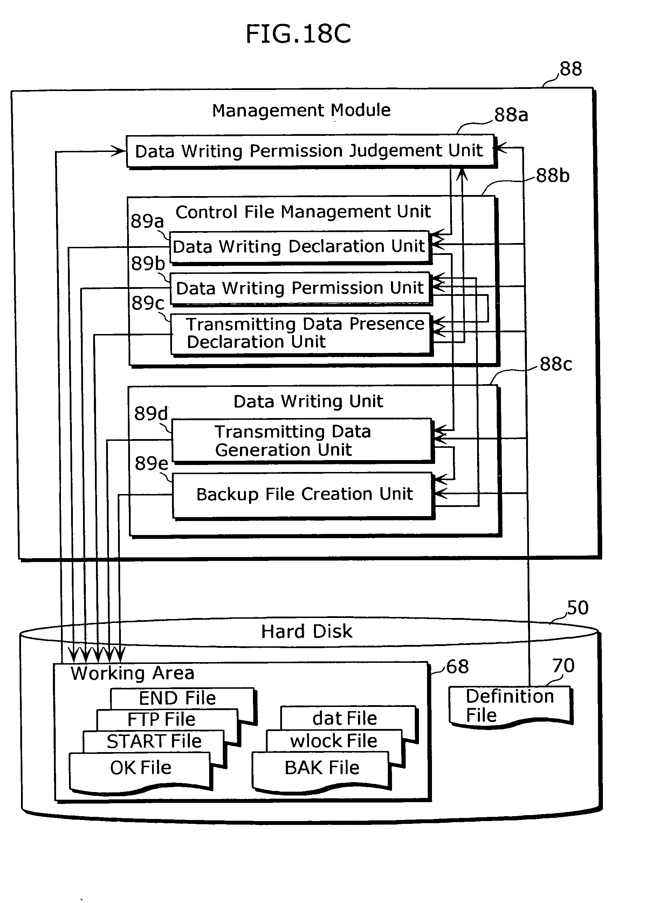

FIG. 18C is a functional block diagram showing a detailed configuration of a management module 88.

The management module 88 includes a data writing permission judgement unit 88a, a control file management unit 88b and a data writing unit 88c. The data writing permission judgement unit 88a is a processing unit for judging, by presence or absence of each file stored in the working area 68, whether or not data can be written among files stored in the working area 68.

The control file management unit 88b is a processing unit for performing, based on a state of writing data, a creation and a deletion of each file in the working area 68, having a data writing declaration unit 89a, a data writing permission unit 89b and a transmitting data presence declaration unit 89c. The data writing declaration unit 89a declares that the data writing unit 88c writes data into the working area 68 by creating a wlock file to be described later and rejects the application module 86a to write data in the working area 68. The data permission unit 89b deletes the wlock file and a dat file (entity of the data) to be described later and permits the application module 86a to write the dat file into the working area 68. The transmitting data presence declaration unit 89c creates an OK file to be described later and declares that there is data (a FTP file to be described later) to be transmitted to the data receiving module 90.

The data writing unit 88c is a processing unit for writing data among files stored in the working area 68 according to the judgement result by the data writing permission judgement unit 88a, having a transmitting data generation unit 89d and a backup file creation unit 89e. The transmitting data generation unit 89d generates data to be transmitted by appending a dat file (described later) to a FTP file (described later). The backup file creation unit 89e creates a backup file of the dat file (a BAK file to be described later).

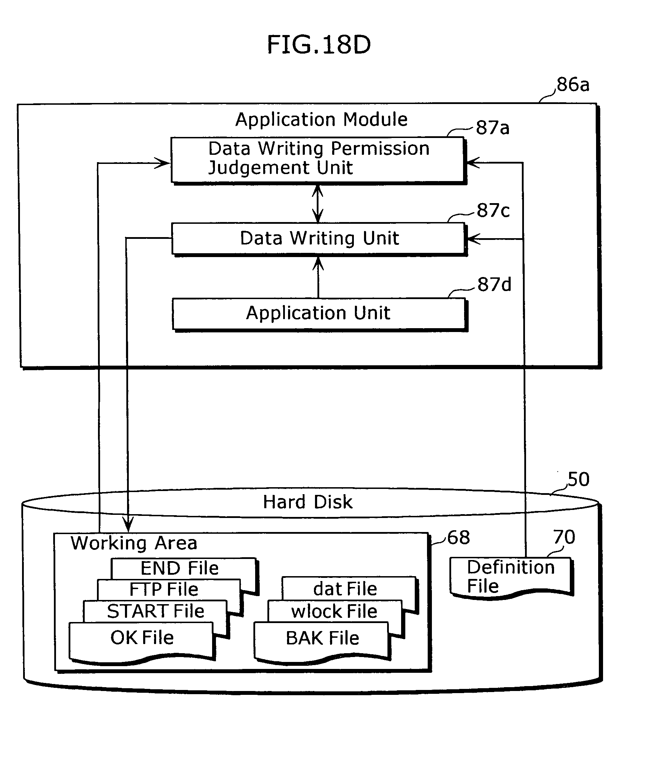

FIG. 18D is a functional block diagram showing a detailed configuration of an application module 86a as a paradigm.

The application module 86a has a data writing permission judgement unit 87a, a data writing unit 87c and an application unit 87d. The data writing permission judgement unit 87a is a processing unit for judging, by presence or absence of each file stored in the working area 68, whether or not data can be written into the working area 68. The data writing unit 87c is a processing unit for writing data into the working area 68 according to the judgement result by the data writing permission judgement unit 87a. The application unit 87d is a processing unit for generating data to be written by the data writing unit 87c by executing a predetermined processing.

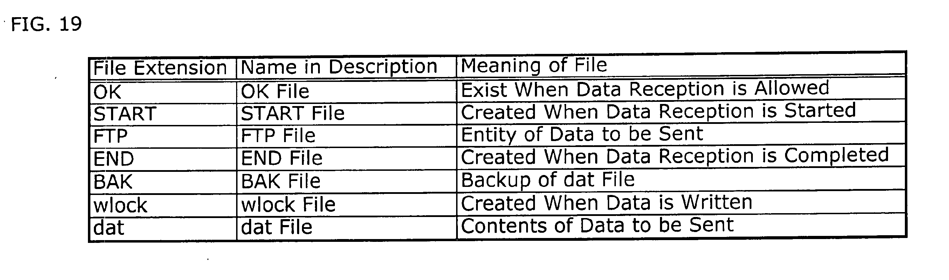

FIG. 19 is a diagram listing, by an extension, the meaning of each file stored in the working area 68.

The file whose extension is "OK" (hereafter referred to as "OK file") is a file exists in the case where the data receiving apparatus 84 can receive a file from the data receiving apparatus 82. The file size of the OK file is 0 byte.

The file whose extension is "START" (hereafter referred to as "START file") indicates that the data receiving apparatus 84 has started receiving data from the data transmitting apparatus 82. The file size of the START file is 0 byte.

The file whose extension is "FTP" (hereafter referred to as "FTP file") is a file including content of data to be transmitted from the data transmitting apparatus 82 to the data receiving apparatus 84.

The file whose extension is "END" (hereafter referred to as "END file") is a file to be created when the data receiving apparatus 84 completes receiving data from the data transmitting apparatus 82. The file size of the END file is 0 byte.

The file whose extension is "BAK" (hereafter referred to as "BAK file") is a backup file of a dat file to be described later, created by the application module 86a.

The file whose extension is "wlock" (hereafter referred to as "wlock file") is a file to be created when the management module 88 writes data in the working area 68. While the wlock file exists, the application module 86a cannot write data in the working area 68.

The file whose extension is "dat" (hereafter referred to as "dat file") is a file to be created by the application module 86a, the file being in which data to be transmitted from the data transmitting apparatus 82 to the data receiving apparatus 84 is stored.

Next, the operations executed by the data receiving module 90, the management module 88, and the application module 86a are explained with reference to flowcharts. In here, files created and deleted by three modules have same name units.

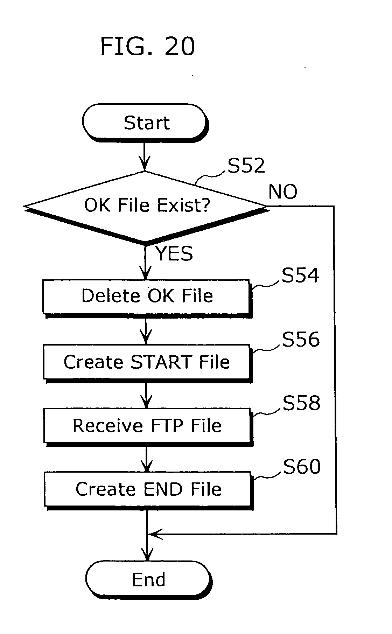

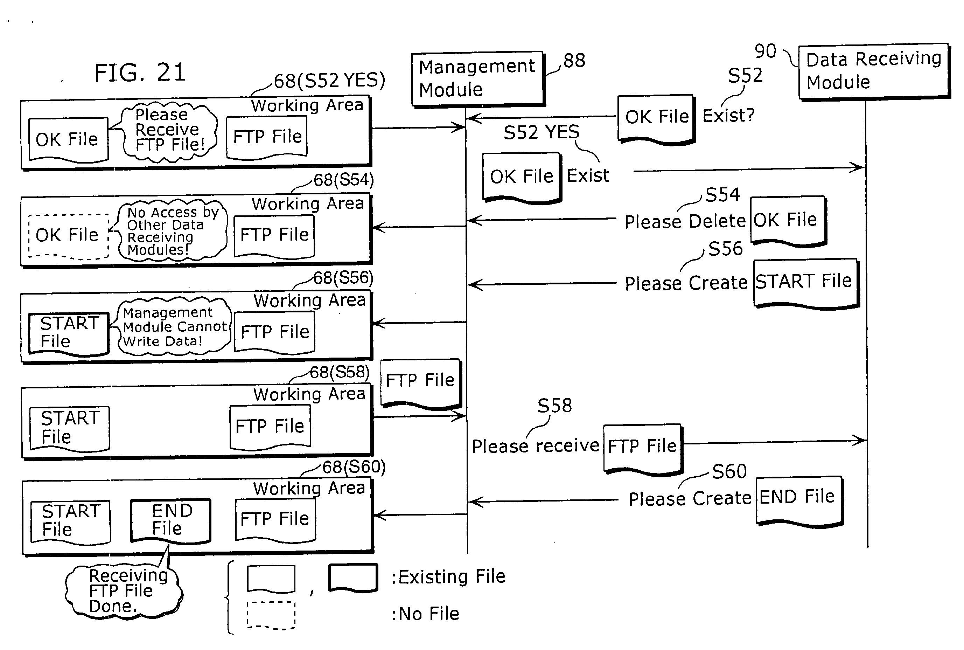

FIG. 20 is a flowchart of a process executed by the data receiving module 90. FIG. 21 is a diagram showing an example of files stored in the working area 68 when the data receiving module 90 executes the process. The following explains about the process executed by the data receiving module 90 with reference to FIGS. 20 and 21.

The data receiving module 90 checks whether or not the OK file exists in the working area 68 (S52). A state where the OK file exists indicates an existence of a file that the data transmitting apparatus 82 should receive from the data receiving apparatus 84.

If the OK file does not exist (No at S52), the data receiving module 90 terminates the process. If the OK file exists (YES at S52), the data receiving module 90 deletes the OK file (S54). The deletion of the OK file prevents data receiving modules of other data receiving apparatuses from accessing to the working area 68.

The data receiving module 90 creates the START file (S56). The creation of the START file prevents the management module 88 from writing data in the working area 68.

The data receiving module 90 receives the FTP file stored in the working area 68 (S58). After receiving the FTP file, the data receiving module 90 creates the END file in the working area 68 (S60) and declares that the FTP file is received from the working area 68.

In here, the data receiving module 90 cannot directly refer to the working area 68. Therefore, the above mentioned processes are performed via the management module 88 of the data transmitting apparatus 82.

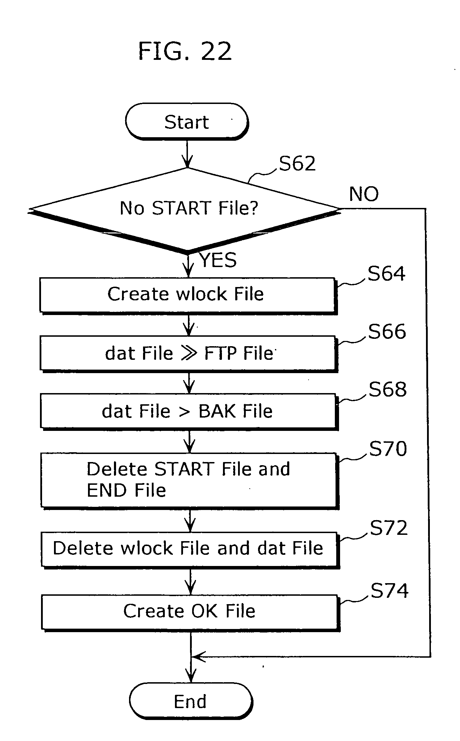

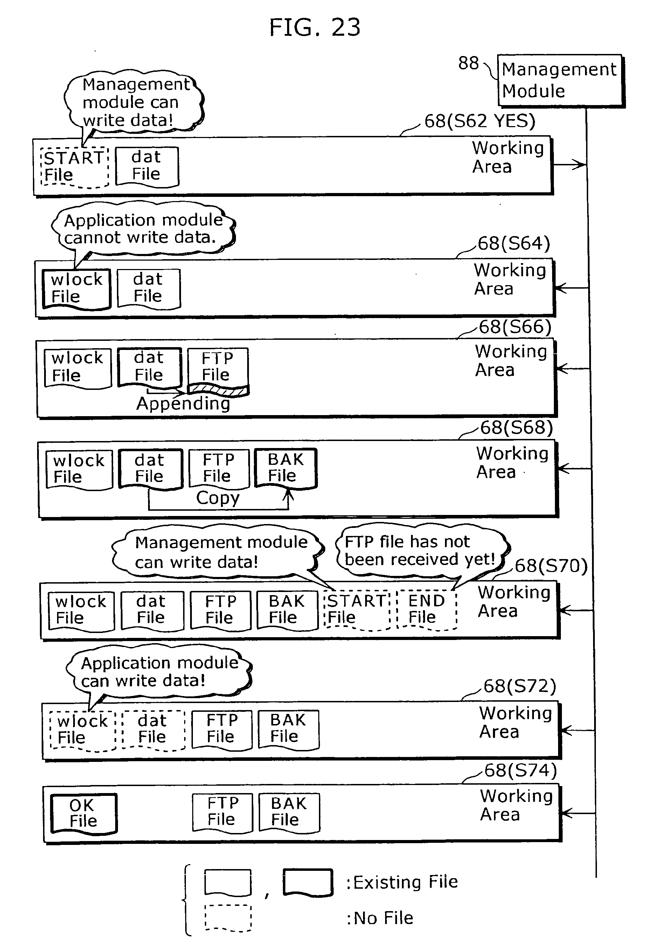

FIG. 22 is a flowchart of a process executed by the management module 88. FIG. 23 is a diagram showing an example of a file stored in the working area 68 when the management module 88 executes the process. The following explains about the process executed by the management module 88 with reference to FIGS. 22 and 23.

The management module 88 checks whether or not the START file exists in the working area 68 (S62). If the START file exists, there is a possibility that the data receiving module 90 is receiving the FTP file. Therefore, if the START file exists (NO at S62), the management module 88 terminates the process. On the other hand, if the START file does not exist (YES at S62), the management module 88 creates the wlock file in the working area 68 (S64). The creation of the wlock file declares to write data in the working area 68 and prevents the application module 86a from writing data into the working area 68.

After the wlock file is created, the management module 88 appends a dat file to the FTP file (S66), and the dat file is copied to the BAK file (S68).

After that, the management module 88 deletes the START file and the END file (S70) followed by the deletions of the wlock file and the data file (S72). The deletions of the wlock file and the dat file allow the application module 86a to write the dat file into the working area 68.

Lastly, the management module 88 creates the OK file (S74). The creation of the OK file indicates the presence of the FTP file to be transmitted to the data receiving module 90 so that the data receiving module 90 can receive the FTP file from the working area 68.

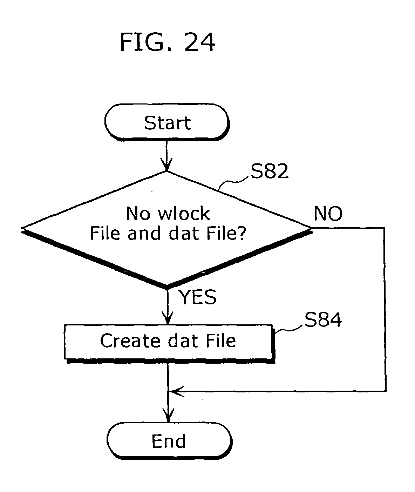

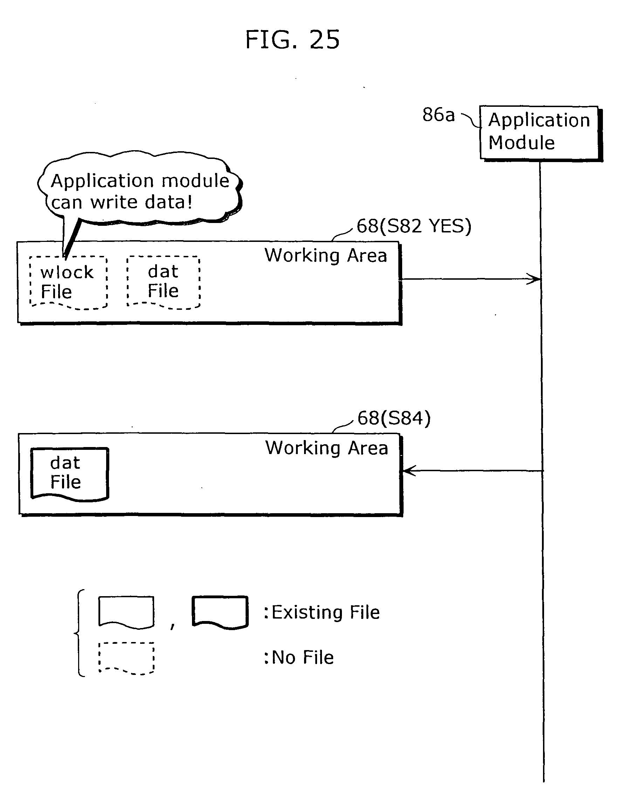

FIG. 24 is a flowchart of a process executed by the application module 86a. FIG. 25 is a diagram showing an example of files stored in the working area 68 when the application module 86a executes the process. The following explains about the process executed by the application module 66a with reference to FIGS. 24 and 25.

The application module 86a refers to the working area 68 and checks whether or not both of the wlock file and the dat file exist (S82). In a state where the wlock file exists, the management module 88 is writing data so that the application module 86a cannot write data. If the application module 86a further creates a dat file in the case where the dat file already exists, the newly created dat file is overwritten on the dat file stored in the working area 68.

Consequently, in the case where either of the wlock file or the dat file exists in the working area 68 (NO at S82), the application module 86a terminates the process.

On the other hand, in the case where neither the wlock file nor the dat file exist (YES at S82), the application module 86a creates data in the working area 68 as a dat file (S84), the data being created as a result of executing the process by the application module 86a.

Here, the management module 88, as in the first embodiment, outputs a log file (not shown in Figures), as needed, that shows a state of operations in the case where there is a change in files stored in the working area 68.

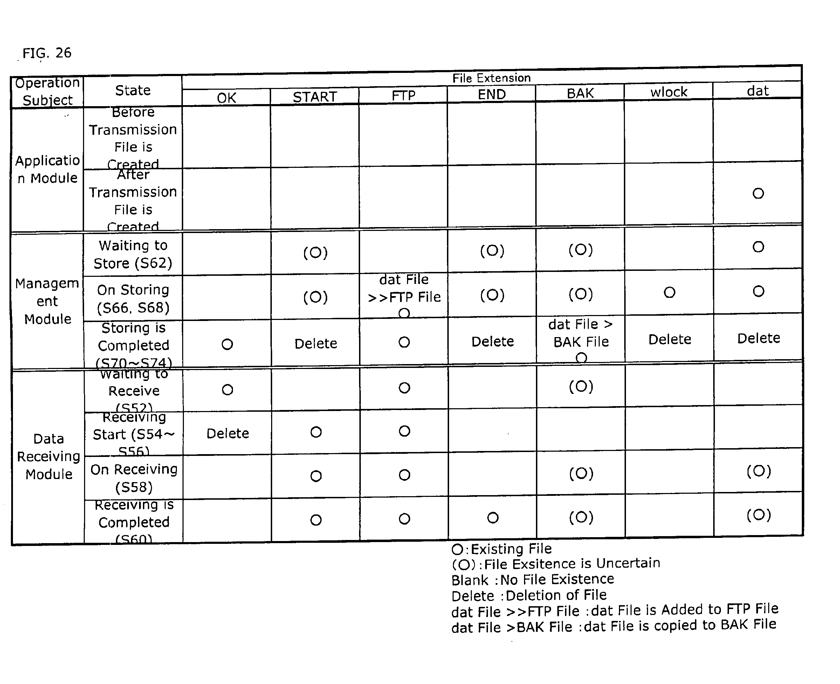

FIG. 26 is a diagram showing, in a file transmitting and receiving apparatus, an operation subject, a state of operation, and presence or absence of each file.

As shown in FIG. 26, in a typical file transmitting and receiving process, i ) the application module 86a transmits a dat file, ii ) the management module 88 stores the received dat file in the FTP file, and iii ) the data receiving module 90 receives the FTP file. However, the application module 86a, the management module 88 and the data receiving module 90 operate as own process. Therefore, the process is not necessarily performed in this order.

As shown in FIG. 26, for example, in a state where the application module 86a terminates the process of creating a transmission file (S84), only the dat file exists.

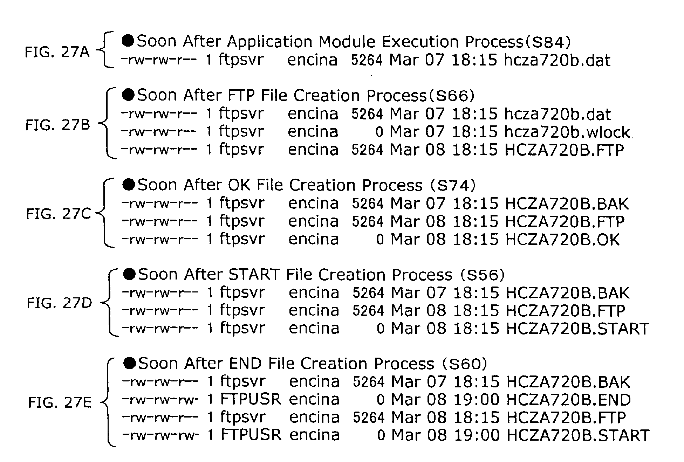

FIG. 27 is a diagram showing an example of a list of files stored in the working area 68 in each state of operation. The list shown in FIG. 27 is created by executing the "Is command" by UNIX. FIGS. 27A to 27E show transitions of files generated according to the typical process of file transmission and reception and stored in the working area 68.

As shown in FIG. 27A, soon after the process of creating the dat file (S84) by the application module 86a shown in FIG. 24, the dat file has been created.

As shown in FIG. 27B, soon after the process of creating the FTP file (S66) by the management module 88 shown in FIG. 22, the wlock file and the FTP file have newly been created. Here, the name unit of the file name of the FTP file is changed the name unit of the file name of the dat file written in capital letters to small letters.

As shown in FIG. 27C, soon after the process of creating the OK file (S74), the wlock file and the dat file have been deleted and the OK file has been created.

As shown in FIG. 27D, soon after the process of creating the START file (S56) by the data receiving module shown in FIG. 20, the OK file has been deleted and the START file has been created.

As shown in FIG. 27E, soon after the process of creating the END file (S60) is terminated, the END file has been created.

Next, focusing on each OK file, wlock file and START file among files used for an exclusion control of each module, the transition from the creation to the deletion is explained.

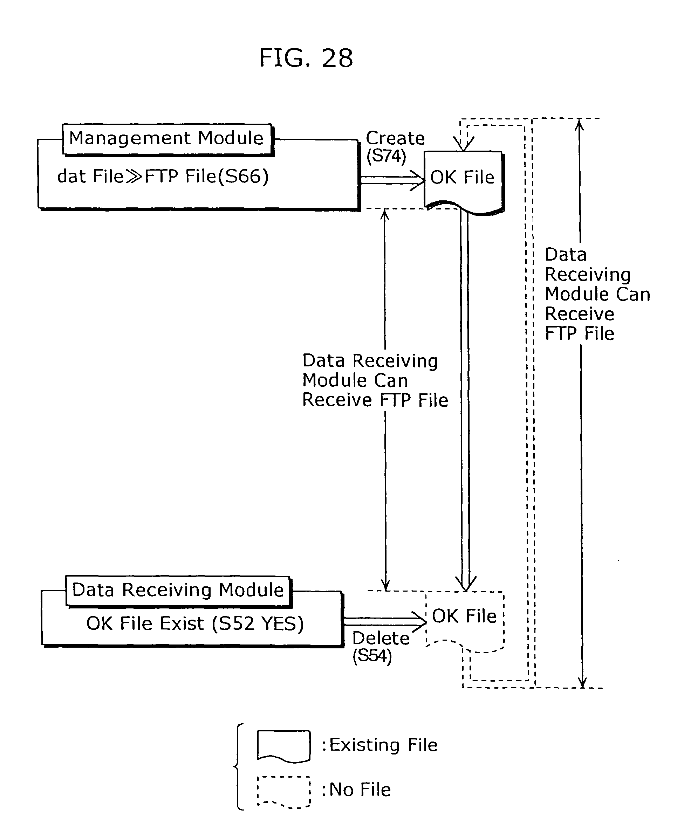

FIG. 28 is a diagram showing a transition from a creation to a deletion of the OK file. The OK file is created (S74) after the FTP file is updated by the management module 88 (S66) as shown in FIGS. 22 and 23. The OK file, as shown in FIGS. 20 and 21, is deleted by the data receiving module 90 (S54) in the case where the OK file exists in the working area 68 (YES at S52). While the OK file exists, the data receiving module 90 can receive the FTP file. On the other hand, while the OK file does not exist, the data receiving module 90 cannot receive data. Thus, the exclusion control on an access to the working area 68 by the data receiving module 90 is performed by presence or absence of the OK file.

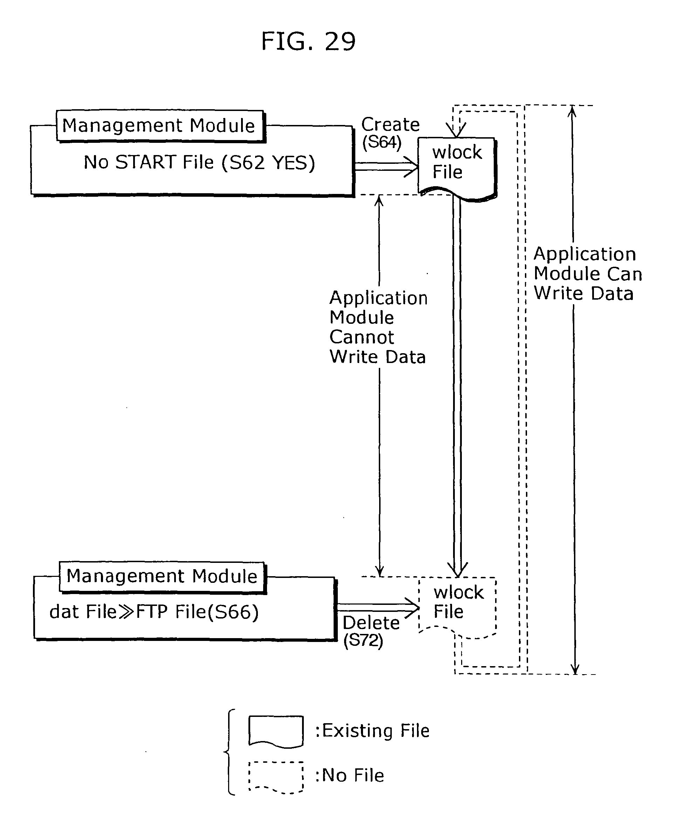

FIG. 29 is a diagram showing a transition from a creation to a deletion of the wlock file. As shown in FIGS. 22 and 23, the wlock file is created by the management module 88 (S64) in the case where the START file does not exist in the working area 68 (YES at S62). Also, the wlock file is deleted by the management module 88 (S72) after the FTP file is updated by the management module 88 (S66). While the wlock file exists, the application module 86a cannot write data. On the other hand, while the wlock file does not exist, the application module 86a can write the data. Thus, the exclusion control on an access to the working area 68 by the application module 86a is performed by presence or absence of the wlock file.

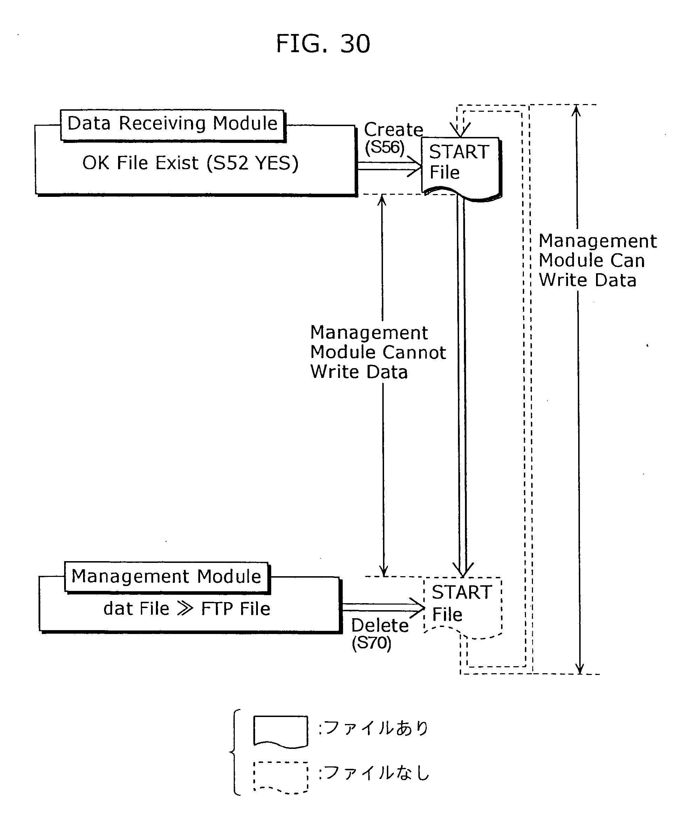

FIG. 30 is a diagram showing a transition from a creation to a deletion of the START file. As shown in FIGS. 20 and 21, the START file is created by the data receiving module 90 (S56) in the case where the OK file exists in the working area 68 (YES at S52). The START file is deleted by the management module 88 (S70) after the FTP file is updated by the management module 88 (S66). While the START file exists, the management module 88 cannot write data. On the other hand, while the START file does not exist, the management module 88 can write the data. Thus, the exclusion control on an access to the working area 68 by the management module 88 is performed by presence or absence of the START file.

As described above, according to the present embodiment, each state is shown by presence or absence of the OK file, the START file, the END file, the wlock file and the dat file. Accordingly, operations of the data receiving module 90, the management module 88 and the application module 86a are controlled.

Thus, each module is controlled only by presence or absence of the files. Therefore, the data transmitting and receiving system can be built easily even in the environment where different models coexist.

Also, a high-speed data transmitting and receiving control can be performed without opening the files every time when the data is transmitted and received.

Furthermore, the dat file is appended to the FTP file by the management module 88 and deleted after it was appended, the dat file being written in the working area 68 by the application module 86a. Therefore, the application module 86a can write, in sequence, the dat file into the working area 68 when the working area 68 is available for writing. Further, the extension of a file into which the application module 86a writes data and the extension of a file into which the management module 88 writes the data are different from each other. Thus, the process of writing data by the application module 86a and the process of writing data by the management module 88 do not interfere with each other.

Further, the management module 88 outputs a log file as needed. Consequently, the manager of the system can control whether or not the transmission and reception of data are correctly performed.

Furthermore, the management module 88 creates a BAK file which is a copy of the dat file. Therefore, an important data will not be lost even if the system does not function correctly during its operation.

According to the present invention, the data transmitting and receiving system can be built easily even in the environment where different models coexist.

Further, the transmission and reception of data can be controlled in high-speed.

Further, the state of operation in the transmission and reception of data can be grasped.

Further, the process of transmitting data and the process of receiving data do not interfere with each other.

Further, it is prevented for a plurality of data transmitting apparatuses to transmit data files to the data receiving apparatus at once.

Further, the manager of the system can control whether or not the process of transmitting and receiving data is correctly performed.

Furthermore, the important data will not be lost even in the case where the system does not operate correctly during its operation.

According to the above embodiments, the system has a structure that the data receiving module 90 cannot directly access to the working area 68. However, in here, the structure may permit the direct access.

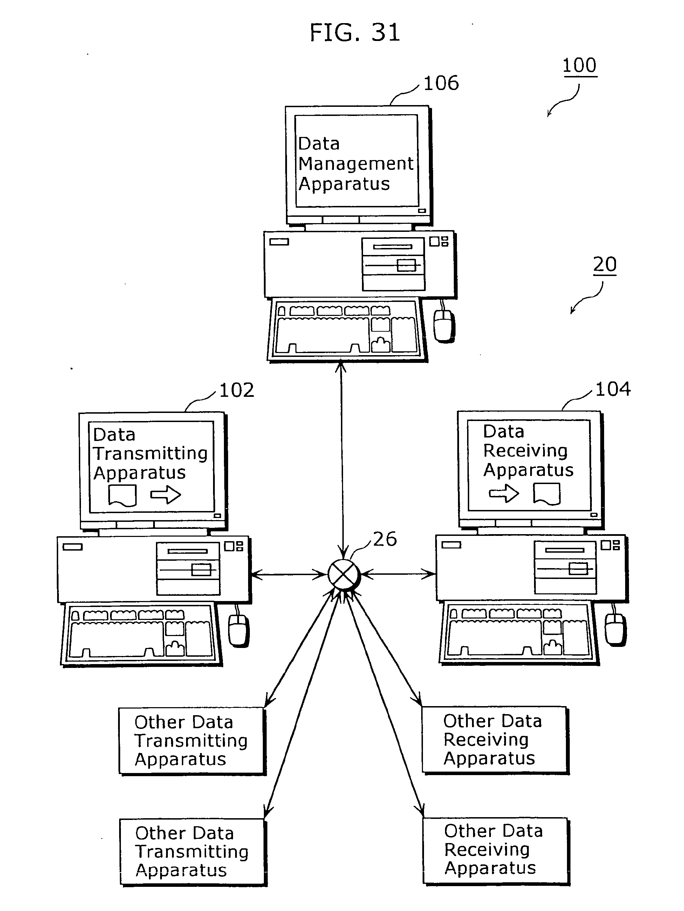

The structure of the data transmitting and receiving apparatus is not limited in the above mentioned embodiments. In other words, as the data transmitting and receiving system 100 shown in FIG. 31, the system may have a plurality of data transmitting apparatuses 102 as well as a plurality of data receiving apparatuses 104. Also, a data management apparatus 106 may be set in the system. The data management apparatus 106 is made up with a management module 64 included in the data receiving apparatus 24 and a hard disk 50. Also, the data management apparatus 106 is made up with a management module 88 included in the data transmitting apparatus 82 and a hard disk 50. The data transmitting apparatus 102 either has the same structure as of the data transmitting apparatus 22 or is formed of the application module group 86. Further, the data receiving apparatus 104 either is formed of the application module 66 or has the same structure as of the data receiving apparatus 84.

Thus, the data transmitting and receiving system according to the present invention can perform a high-speed data transmitting and receiving control. In particular, the practical value of the data transmitting and receiving system that transmits and receives vast amount of data is quite high.

Although only some exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention.

## Claims

1. A data transmitting and receiving system, comprising:
a data transmitting apparatus that transmits said data; and
a data receiving apparatus that receives said data,
wherein the data transmitting apparatus and the data receiving apparatus respectively perform control on transmission and reception of said data by presence or absence of a predetermined control specific file.

2. The data transmitting and receiving system according to Claim 1,
wherein said control specific file is an empty file.

3. The data transmitting and receiving system according to Claim 1,
wherein the data transmitting apparatus transmits said data in a data file,
the data receiving apparatus receives said data file transmitted from the data transmitting apparatus and stores the received data file by appending to another file, and
a file name of said data file and a file name of said another file are written with a same letter: the file name of said data file is written in a capital letter; the file name of said another file is written in a small letter, and vice-versa.

4. The data transmitting and receiving system according to Claim 1,
wherein the data transmitting apparatus transmits said data as a data file, and
the data receiving apparatus changes a file name of said data file transmitted from the data transmitting apparatus.

5. The data transmitting and receiving system according to Claim 4,
wherein said data file whose file name is changed is used by the data receiving apparatus.

6. The data transmitting and receiving system according to Claim 4,
wherein the data receiving apparatus changes an extension of the file name of said data file transmitted from the data transmitting apparatus.

7. The data transmitting and receiving system according to Claim 4,
wherein the data receiving apparatus includes:
a storing unit operable to store said control specific file and said data file transmitted from the data transmitting apparatus; and
a data receiving management unit operable to control reception of said data file by presence or absence of said control specific file,
wherein the control specific file includes a transmission permission file that indicates, by presence or absence of said transmission permission file, whether or not the data transmitting apparatus can transmit said data file to the data receiving apparatus,
the data transmitting apparatus transmits, in the case where said transmission permission file exists, said data file to the data receiving apparatus after deleting said transmission permission file, and
the data receiving management unit creates said transmission permission file after changing the file name of said data file transmitted from the data transmitting apparatus.

8. The data transmitting and receiving system according to Claim 7,
wherein the data receiving apparatus further includes an application executing unit operable to execute a predetermined process using said data file transmitted from the data transmitting apparatus,
the control specific file further includes a write lock file that indicates, by presence or absence of said write lock file, whether or not the data receiving management unit is changing the file name of said data file,
the data receiving management unit i ) generates said write lock file before changing the file name of said data file received from the data transmitting apparatus and ii) deletes said write lock file after changing the file name of said data file, and
the application executing unit does not read said data file from the storing unit while said write lock file exists.

9. The data transmitting and receiving system according to Claim 7,
wherein the control specific file further includes a read lock file that indicates, by presence or absence of said read lock file, whether or not the application executing unit is using said data file;
the application executing unit i ) creates said read lock file before reading said data file and ii ) deletes said read lock file after reading said data file, and
the data receiving management unit does not change the file name of said data file while said read lock file exists.

10. The data transmitting and receiving system according to Claim 7,
wherein the data receiving management unit outputs, as a log file, a state of operation that is associated with a state of said control specific data file or said data file stored in the storing unit.

11. The data transmitting and receiving system according to Claim 7,
wherein the data receiving management unit creates a backup file of said data file transmitted from the data transmitting apparatus.

12. The data transmitting and receiving system according to Claim 1,
wherein the data transmitting apparatus includes:
a storing unit operable to store a data file in which said control specific file and said data are stored; and
a data transmission management unit operable to control transmission of said data file by presence or absence of said control specific file,
wherein said control specific file includes a receiving permission file that indicates, by presence or absence of said receiving permission file, whether or not the data receiving apparatus can receive said data file,
the data transmission management unit creates said receiving permission file at a time when said data file to be transmitted is created, and
the data receiving apparatus receives said data file from the data transmitting apparatus after deleting the receiving permission file in the case where the receiving permission file exists.

13. The data transmitting and receiving system according to Claim 12,
wherein the data transmitting management unit stores said data file by appending to another file,
a file name of said data file and a file name of said another file are written with a same letter: the file name of said data file is written in a capital letter; the file name of said another file is written in a small letter, and vice-versa.

14. The data transmitting and receiving system according to Claim 12,
wherein the data transmitting apparatus further includes an application executing unit operable to store a data file to be created by executing a predetermined process, and
the data transmitting management unit changes a file name of said data file.

15. The data transmitting and receiving system according to Claim 14,
wherein said data file whose file name is changed is used by the data receiving apparatus.

16. The data transmitting and receiving system according to Claim 14,
wherein the data transmitting management unit changes an extension of the file name of said data file.

17. The data transmitting and receiving system according to Claim 14,
wherein said control specific file further includes a write lock file that indicates, by presence or absence of said write lock file, whether or not the data transmitting management unit is changing the file name of said data file,
the data transmitting management unit i ) creates said write lock file before changing the file name of said data file created by the application executing unit and ii ) deletes said write lock file after the file name of said data file is changed, and
the application executing unit does not write said data file into the storing unit while said write lock file exists.

18. The data transmitting and receiving system according to Claim 14,
wherein the control specific file further includes a receiving start file that indicates, by presence or absence of said receiving start file, whether or not the data receiving apparatus has started receiving said data file from the data transmitting apparatus,
the data receiving apparatus creates said receiving start file before starting to receive said data file from the data transmitting apparatus, and
the data transmitting management unit can change the file name of said data file created at the application executing unit only in the case where said receiving start file does not exist.

19. The data transmitting and receiving system according to Claim 14,
wherein the control specific file further includes a receiving completion file that indicates, by presence or absence of said receiving completion file, whether or not the data receiving apparatus has completed receiving said data file from the data transmitting apparatus.

20. The data transmitting and receiving system according to Claim 14,
wherein the data transmitting management unit creates a backup file of said data file created at the application executing unit.

21. The data transmitting and receiving system according to Claim 12,
wherein the data transmitting management unit outputs, as a log file, a state of operation that is associated with a state of said control specific file or said data file stored in the storing unit.

22. A data transmitting and receiving system, comprising:
a data transmitting apparatus that transmits said data;
a data receiving apparatus that receives said data; and
a management apparatus that manages a creation and a deletion of a predetermined control specific file,
wherein the management apparatus performs respectively control on transmitting and receiving of said data by presence or absence of said control specific file.

23. The data transmitting and receiving system according to Claim 22,
wherein the control specific file includes a transmission permission file that indicates, by presence or absence of said transmission permission file, whether or not the data transmitting apparatus can transmit said data to the data receiving apparatus.

24. The data transmitting and receiving system according to Claim 22,
wherein the control specific file includes a write lock file that indicates, by presence or absence of said write lock file, whether or not the data receiving apparatus is changing a file name of said data.

25. The data transmitting and receiving system according to Claim 22,
wherein the control specific file includes a read lock file that indicates, by presence or absence of said read lock file, whether or not the data receiving apparatus is using said data.

26. The data transmitting and receiving system according to Claim 22,
wherein the control specific file includes a receiving permission file that indicates, by presence or absence of said receiving permission file, whether or not the data receiving apparatus can receive said data.

27. The data transmitting and receiving system according to Claim 22,
wherein the control specific file includes a write lock file that indicates, by presence or absence of said write lock file, whether or not the data transmitting apparatus is changing the file name of said data.

28. The data transmitting and receiving system according to Claim 22,
wherein the control specific file includes a receiving completion file that indicates, by presence or absence of said receiving completion file, whether or not the data receiving apparatus has started receiving said data from the data transmitting apparatus.

29. The data transmitting and receiving system according to Claim 22,
wherein the control specific file includes a receiving completion file that indicates, by presence or absence of said receiving completion file, whether or not the data receiving apparatus has completed receiving said data from the data transmitting apparatus.

30. A data transmitting apparatus that transmits data in a data transmitting and receiving system, comprising:
a transmitting unit operable to transmit said data, and
a controlling unit operable to control, by presence or absence of a predetermined control specific file, the transmission of said data by said transmitting unit.

31. A data receiving apparatus that receives data in a data transmitting and receiving system, comprising:
a receiving unit operable to receive said data, and
a controlling unit operable to control, by presence or absence of a predetermined control file, the reception of said data by said receiving unit.

32. A data transmitting and receiving method in a data transmitting and receiving system comprising a data transmitting apparatus and a data receiving apparatus, the method including the following steps of:
transmitting data; and
receiving said data,
wherein at least one of operations of said data transmitting step and said data receiving step is controlled by presence or absence of a predetermined control specific file.

33. A program for causing a computer to operate as a data transmitting apparatus, said data transmitting apparatus including:
a transmitting unit operable to transmit data; and
a controlling unit operable to control, by presence or absence of a predetermined control specific file, the transmission of said data by said transmitting unit.

34. A program for causing a computer to operate as a data receiving apparatus, said data receiving apparatus including:
a receiving unit operable to receive data; and
a controlling unit operable to control, by presence or absence of a predetermined control specific file, the reception of said data by said receiving unit.

35. A computer readable recording medium on which a program for causing a computer to operate as a data transmitting apparatus is recorded, the data transmitting apparatus including:
a transmitting unit operable to transmit data; and
a controlling unit operable to control, by presence or absence of a predetermined control specific file, the transmission of said data by said transmitting unit.

36. A computer readable recording medium on which a program for causing a computer to operate as a data receiving apparatus is recorded, the data receiving apparatus including:
a receiving unit operable to receive data; and
a controlling unit operable to control, by presence or absence of a predetermined control specific file, the reception of said data by said receiving unit.
